# EUROPÄISCHE PATENTSCHRIFT

(11) **EP 1 518 282 B1**
(45) Veröffentlichungstag und Bekanntmachung des Hinweises auf die Patenterteilung: **08.09.2010**
(21) Anmeldenummer: 03718780.4
(22) Anmeldetag: 22.04.2003
(51) Int. Cl.: H01M 2/00

(54) **MEHRSCHICHTIGE ELEKTROLYTMEMBRAN**
MULTILAYER ELECTROLYTE MEMBRANE
MEMBRANE ELECTROLYTE MULTICOUCHE

(30) Priorität: 25.04.2002 DE 10218368; 25.04.2002 DE 10218367
(43) Veröffentlichungstag der Anmeldung: 30.03.2005
(73) Patentinhaber: BASF Fuel Cell GmbH, 65926 Frankfurt am Main (DE)
(72) Erfinder: UENSAL, Oemer, 55128 Mainz (DE); KIEFER, Joachim, 66679 Losheim am See (DE)
(74) Vertreter: Luderschmidt, Schüler & Partner
(86) Internationale Anmeldenummer: PCT/EP2003/004117
(87) Internationale Veröffentlichungsnummer: WO 2003/092090

(56) Entgegenhaltungen:
- WO-A-01/45192
- DE-A- 19 653 484
- US-A- 4 634 530
- US-A- 5 211 984
- US-B1- 6 197 147

## Beschreibung

Die vorliegende Erfindung betrifft eine protonenleitende mehrschichtigen Elektrolytmembran, ein Verfahren zur deren Herstellung und eine Brennstoffzelle enthaltend eine solche Membran.

Eine Brennstoffzelle enthält üblicherweise einen Elektrolyten und zwei durch den Elektrolyten getrennte Elektroden. Im Fall einer Brennstoffzelle wird einer der beiden Elektroden ein Brennstoff, wie Wasserstoffgas, und der anderen Elektrode ein Oxidationsmittel, wie Sauerstoffgas, zugeführt und dadurch chemische Energie aus der Brennstoffoxidation in elektrische Energie umgewandelt.

Der Elektrolyt ist für Wasserstoffionen, d.h. Protonen, aber nicht für reaktive Gase wie das Wasserstoffgas und das Sauerstoffgas durchlässig.

Eine Brennstoffzelle weist in der Regel mehrere Einzelzellen sogenannte MEE's (Membran-Elektroden-Einheit) auf, die jeweils einen Elektrolyten und zwei durch den Elektrolyten getrennte Elektroden enthalten.

Als Elektrolyt für die Brennstoffzelle kommen Feststoffe wie Polymerelektrolytmembranen oder Flüssigkeiten wie Phosphorsäure zur Anwendung. In jüngster Zeit haben Polymerelektrolytmembranen als Elektrolyte für Brennstoffzellen Aufmerksamkeit erregt. Prinzipiell kann man zwischen 2 Kategorien von Polymermembranen unterscheiden.

Zu der ersten Kategorie gehören Kationenaustauschermembranen bestehend aus einem Polymergerüst welches kovalent gebunden Säuregruppen, bevorzugt Sulfonsäuregruppen enthält. Die Sulfonsäuregruppe geht unter Abgabe eines Wasserstoffions in ein Anion über und leitet daher Protonen. Die Beweglichkeit des Protons und damit die Protonenleitfähigkeit ist dabei direkt an den Wassergehalt verknüpft. Trocknet die Membran, z.B. in Folge hoher Temperatur, aus, so nimmt die Leitfähigkeit der Membran und folglich die Leistung der Brennstoffzelle drastisch ab. Die Betriebstemperaturen von Brennstoffzellen enthaltend solche Kationenaustauschermembranen ist somit auf die Siedetemperatur des Wassers beschränkt. So verwendet man als Materialien für Polymerelektrolytmembranen beispielsweise Perfluorsulfonsäurepolymere. Das Perfluorsulfonsäurepolymer (wie z.B. Nafion) weist im allgemeinen ein Perfluorkohlenwasserstoffgerüst auf, wie ein Copolymer aus Tetrafluorethylen und Trifluorvinyl, und eine daran gebundene Seitenkette mit einer Sulfonsäuregruppe, wie eine Seitenkette mit einer an eine Perfluoralkylengruppe gebundenen Sulfonsäuregruppe.

Die Befeuchtung der Brennstoffe stellt eine grosse technische Herausforderung für den Einsatz von Polymerelektrolytmembranbrennstoffzellen (PEMBZ) dar, bei denen konventielle, sulfonierte Membranen wie z.B. Nafion verwendet werden.

Als zweite Kategorie sind Polymerelektrolytmembranen mit Komplexen aus basischen Polymeren und starken Säuren entwickelt worden. So beschreibt WO96/13872 und die korrespondierende US-PS 5,525,436 ein Verfahren zur Herstellung einer protonenleitenden Polymerelektrolytmembranen, bei dem ein basisches Polymer, wie Polybenzimidazole, mit einer starken Säure, wie Phosphorsäure, Schwefelsäure usw., behandelt wird.

Eine solche Brennstoffzelle, bei der eine derartige Polymerelektrolytmembran eingesetzt wird, hat den Vorteil, daß sie ohne Befeuchtung und bei Temperaturen von 100°C oder darüber betrieben werden kann.

In J. Electrochem. Soc., Band 142, Nr. 7, 1995, S. L121-L123 wird die Dotierung eines Polybenzimidazols in Phosphorsäure beschrieben.

Das U.S. Patent No. 6197147 offenbart ein Verfahren zur Herstellung von Membran-Elektroden Einheiten (MEE) mittels eines kontinuierlichen Laminierungsprozesses. Hierbei werden die zur Herstellung der MEE benötigten Ausgangsmaterialien in Form von Warenbahnen zugeführt und miteinander verbunden. Als ionenleitfähige Membranen werden auch solche auf Basis von Polybenzimidazol und Phosphorsäure offenbart. Das U.S. Patent No. 6197147 verweist ferner auf die Offenbarung von U.S. Patent No. 5211984, welches "solid polymer electrolyte" Membranen offenbart bzw. das Aufsprühen einer "Catalst Ink", d.h. einer Mischung im Wesentlichen aus Ionomer und Katalysator, auf Membranen auf Basis von Nafion.

Bei den im Stand der Technik bekannten basischen Polymermembranen wird die - zum Erzielen der erforderlichen Protonenleitfähigkeit - eingesetzte Mineralsäure (meist konzentrierte Phosphorsäure) entweder nach der Formgebung eingesetzt oder alternativ dazu die basische Polymermembran direkt aus Polyphosphorsäure wie in der deutschen Patentanmeldung Nr. 10117686 Nr. 10144815 und Nr. 10117687 hergestellt. Das Polymer dient dabei als Träger für den Elektrolyten bestehend aus der hochkonzentrierten Phosphorsäure, respektive Polyphosphorsäure. Die Polymermembran erfüllt dabei weitere wesentliche Funktionen insbesondere muss sie eine hohe mechanische Stabilität aufweisen und als Separator für die beiden eingangs genannten Brennstoffe dienen.

Wesentliche Vorteile einer solchen Phosphorsäure dotierten Membran ist die Tatsache, dass dieses System bei Temperaturen oberhalb 100°C ohne eine sonst notwendige Befeuchtung der Brennstoffe betrieben werden kann. Dies liegt in der Eigenschaft der Phosphorsäure begründet die Protonen ohne zusätzliches Wasser mittels des sog. Grotthus Mechanismus transportieren zu können (K.-D. Kreuer, Chem. Mater. 1996, 8, 610-641).

Durch die Möglichkeit des Betriebes bei Temperaturen oberhalb 100°C ergeben sich weitere Vorteile für das Brennstoffzellensystem. Zum Einen wird die Empfindlichkeit des Pt-Katalysators gegenüber Gasverunreinigungen, insbesondere CO, stark verringert. CO entsteht als Nebenprodukt bei der Reformierung des wasserstoffreichen Gases aus Kohlenstoffhaltigen Verbindungen, wie z.B. Erdgas, Methanol oder Benzin oder auch als Zwischenprodukt bei der direkten Oxidation von Methanol. Typischerweise muss der CO-Gehalt des Brennstoffes bei Temperaturen <100°C kleiner als 100 ppm sein. Bei Temperaturen im Bereich 150-200° können jedoch auch 10000 ppm CO oder mehr toleriert werden (N. J. Bjerrum et. al. Journal of Applied Electrochemistry, 2001,31, 773-779). Dies führt zu wesentlichen Vereinfachungen des vorgeschalteten Reformierungsprozesses und somit zu Kostensenkungen des gesamten Brennstoffzellensystems.

Ein grosser Vorteil von Brennstoffzellen ist die Tatsache, dass bei der elektrochemischen Reaktion die Energie des Brennstoffes direkt in elektrische Energie und Wärme umgewandelt wird. Als Reaktionsprodukt entsteht dabei an der Kathode Wasser. Als Nebenprodukt bei der elektrochemischen Reaktion entsteht also Wärme. Für Anwendungen bei denen nur der Strom zum Antrieb von Elektromotoren genutzt wird, wie z.B. fürAutomobilanwendungen muss die Wärme abgeführt werden, um ein Überhitzen des Systems zu vermeiden. Für die Kühlung werden dann zusätzliche, Energie verbrauchende Geräte notwendig, die den elektrischen Gesamt-Wirkungsgrad der Brennstoffzelle weiter verringern. Für stationäre Anwendungen wie zur zentralen oder dezentralen Erzeugung von Strom und Wärme lässt sich die Wärme effizient durch vorhandene Technologien wie z.B. Wärmetauscher nutzen. Zur Steigerung der Effizienz werden dabei hohe Temperaturen angestrebt. Liegt die Betriebstemperatur oberhalb 100°C und ist die Temperaturdifferenz zwischen der Umgebungstemperatur und der Betriebstemperatur groß, so wird es möglich das Brennstoffzellensystem effizienter zu kühlen beziehungsweise kleine Kühlflächen zu verwenden und auf zusätzliche Geräte zu verzichten im Vergleich zu Brennstoffzellen, die aufgrund der Membranbefeuchtung bei unter 100°C betrieben werden müssen.

Neben diesen Vorteilen weist ein solches System zwei entscheidende Nachteile auf. So liegt Phosphorsäure als Elektrolyt vor, die durch ionische Wechselwirkungen nicht permanent an das basische Polymer gebunden ist und durch Wasser ausgewaschen werden kann. Wasser wird wie oben beschrieben bei der elektrochemischen Reaktion an der Kathode gebildet. Liegt die Betriebstemperatur oberhalb 100°C so wird das Wasser zum Grossteil als Dampf durch die Gasdiffusionselektrode abgeführt und der Säureverlust ist sehr gering. Fällt die Betriebstemperatur jedoch unter 100°C, z.B. beim An- und Abfahren der Zelle oder in Teillastbetrieb wenn eine hohe Stromausbeute angestrebt wird, so kondensiert das gebildete Wasser und kann zu einem verstärkten Auswaschen des Elektrolyten, hochkonzentrierte Phosphorsäure, führen.

Dies kann bei der vorstehend beschriebenen Fahrweise der Brennstoffzelle zu einem stetigen Verlust der Leitfähigkeit und Zellleistung führen, welche die Lebensdauer der Brennstoffzelle vermindern kann.

Weiterer Nachteil von Brennstoffzellen, bei denen die Phosphorsäure als Elektrolyt fungiert, ist die Hemmung der Reduktionsreaktion an der Kathode charakterisiert durch eine hohe Überspannung. Dies führt zu einem geringen Ruhepotential und relativ niedriger Leistung.

Weiterhin können die bekannten mit Phosphorsäure dotierten Membranen nicht in der sogenannten Direkt-Methanol-Brennstoffzelle (DMBZ) eingesetzt werden. Derartige Zellen sind jedoch von besonderem Interesse, da ein Methanol-WasserGemisch als Brennstoff eingesetzt wird. Wird eine bekannte Membran auf Basis von Phosphorsäure verwendet, so versagt die Brennstoffzelle nach einer recht kurzen Zeit.

Der vorliegenden Erfindung liegt daher die Aufgabe zugrunde, eine Polymerelektrolytmembran bereitzustellen, bei der das Auswaschen der Mineralsäure reduziert bzw. verhindert wird und die zusätzlich eine verringerte Überspannung, insbesondere an der Kathode, aufweist. Insbesondere soll so die Betriebstemperatur von <0°C bis auf 200°C ausgeweitet werden können.

Darüber hinaus war es mithin Aufgabe der vorliegenden Erfindung eine Membran zur Verfügung zu stellen, die auch im Betrieb eine geringe Durchlässigkeit gegen die verschiedensten Brennstoffe, wie beispielsweise Wasserstoff oder Methanol aufweist, wobei diese Membran auch eine geringe Sauerstoffpermeabilität zeigen sollte.

Gelöst wird die erfindungsgemäße Aufgabe, durch ein mehrschichtiges Membransystem aus einer mit Mineralsäure dotierten Polymerelektrolytmembran die mindestens einseitig mit einer für die Mineralsäure Sperrschicht beschichtet ist. In dieser Konfiguration erfüllt die mit Mineralsäure dotierte Membran die wesentlichen Funktionen als Separator für die Brennstoffe und die Gewährleistung der mechanischen Stabilität. Die Sperrschicht soll dabei den Verlust der Mineralsäure verhindern und die Überspannung an der Kathode verringern.

Eine erfindungsgemäße Polymerelektrolytmembran besitzt eine sehr geringe Methanolpermeabilität und eignet sich insbesondere für den Einsatz in einer DMBZ. Somit ist ein dauerhafter Betrieb einer Brennstoffzelle mit einer Vielzahl von Brennstoffen wie Wasserstoff, Erdgas, Benzin, Methanol oder Biomasse möglich. Hierbei ermöglichen die Membranen eine besonders hohe Aktivität dieser Brennstoffe. Bedingt durch die hohen Temperaturen kann die Methanoioxidation hierbei mit hoher Aktivität erfolgen.

Gegenstand der vorliegenden Erfindung ist daher eine mehrschichtige Elektrolytmembran enthaltend mindestens
A. ein mit einer oder mehreren Mineralsäuren dotiertes flächiges Material,
B. mindestens eine Sperrschicht welche mindestens eine der beiden Flächen des unter A. genannten mit Materials bedeckt und eine Sperrwirkung gegenüber Mineralsäuren aufweist.

Bei den flächigen Materialien gemäß A. werden sowohl basische Polymere, Mischungen von basischen Polymeren mit anderen Polymeren, chemisch inerte Träger, vorzugsweise keramische Werkstoffe, insbesondere Siliziumcarbide (SiC) wie sie in US-A-4017664 und US-A-4695518 beschrieben sind, eingesetzt. Diese Materialien sind zum Transport von Protonen nach dem Grotthus Mechanismus befähigt.

Als flächiges Material kann ein temperaturstabiler und chemisch inerter Träger verwendet werden, welches zur Erzielung der Protonenleitfähigkeit mit Phosphorsäure gefüllt ist. Als Trägermaterialien kommen beispielweise keramische Werkstoffe wie Siliziumcarbid SiC (US-A-4017664 und US-A-4695518) oder anorganische Gläser in Frage. Dieser Träger kann beispielsweise ein Gewebe oder ein Vlies darstellen. Des weiteren kann der Träger auch aus porösen Materialien ausgebaut sein.

Als chemisch inerter Träger können auch poröse organische Polymere mit einer offenen Porenstruktur verwendet werden. Das offenen Porenvolumen beträgt dabei mehr als 30% bevorzugt mehr als 50% und ganz besonders bevorzugt mehr als 70%. Die Glasübergangstemperatur des organischen Basispolymeren einer solchen Membranen ist dabei höher als die Betriebstemperatur der Brennstoffzelle und beträgt vorzugsweise mindestens 150°C, bevorzugt mindestens 160°C und ganz besonders bevorzugt mindestens 180°C. Solche Membranen finden Einsatz als Separationsmembranen zur Ultrafiltration, Gasseparation, Pervaporation, Nanofiltration, Microfiltration oder Hämodialyse.

Verfahren zur Herstellung solcher Membranen sind in H.P. Hentze, M. Antonietti

"Porous polymers and resins" in F. Schüth "Handbook of Porous Solids" p. 1964-2013 beschrieben.

Als chemisch inerte Träger können auch organische Schäume hergestellt werden. Diese Schäume können hergestellt werden indem bei der Synthese des organischen Polymere Gase wie CO₂ freigesetzt werden oder volatile Flüssigkeiten eingesetzt werden. Verfahren zur Herstellung von organischen Schäumen sind in D. Klempner, K.C. Frisch "Handbook of Polymeric Foams and Foam Technology" und F.A. Shutov Advances in Polymer Science Band 73/74, 1985, Seiten 63-123 beschrieben. Als Porenbildner kann auch superkritisches CO₂ eingesetzt werden.

Eine besonders zweckmässiger Träger ist eine Phasenseparationsmembran aus Polybenzimidazol die wie in US 4693824 oder US 4666996 oder US 5091087 beschrieben hergestellt werden kann. Durch Vernetzung mittels des in US 4634530 beschriebenen Verfahrens kann die chemische Stabilität dieser Membranen gegen Phosphorsäure oder Polyphosphorsäure weiter verbessert werden.

Als Trägermaterialien können weiterhin expandierte Polymerfolien wie expandiertes Teflon eingesetzt werden. Verfahren zur Herstellung von protonenleitenden Membranen durch Füllen einer solchen expandierten perfluorierten Membran sind in US 5547551 beschrieben.

Als Trägermaterialien können ebenfalls hochporöse Duroplaste eingesetzt werden, die durch chemisch induzierte Phasenseparation hergestellt wurden. Bei diesem Verfahren wird zu einer Mischung mehrerer zur Vernetzung befähigter Monomere ein leicht volatiles Lösungsmittel gegeben. Bei der Vernetzung wird dieses Lösungsmittel unlöslich und es bildet sich ein heterogenes Polymer. Durch Verdampfen des Lösungsmittel entsteht ein chemisch inerter, poröser Duroplast, der anschliessend mit Phosphorsäure oder Polyphosphorsäure imprägniert werden kann.

Ein besonders geeigneter Träger kann aus anorganischen Materialien, beispielsweise aus Glas oder Werkstoffen gefertigt werden, die zumindest eine Verbindung aus einem Metall, einem Halbmetall oder einem Mischmetall oder Phosphor mit zumindest einem Element der 3. bis 7. Hauptgruppe aufweisen. Besonders bevorzugt weist der Werkstoff zumindest ein Oxid der Elemente Zr, Ti, Al oder Si auf. Der Träger kann aus einem elektrisch isolierenden Material, wie z. B. Mineralien, Gläser, Kunststoffe, Keramiken oder Naturstoffen bestehen. Vorzugsweise weist der Träger spezielle Gewebe, Vliese oder poröse Materialien aus hochtemperatur- und hochsäurefestem Quarz oder Glas auf. Das Glas enthält vorzugsweise zumindest eine Verbindung aus der Gruppe SiO₂, Al₂O₃ oder MgO. In einer weiteren Variante umfasst der Träger Gewebe, Vliese oder poröse Materialen aus Al₂O₃-, ZrO₂-, TiO₂-, Si₃N₄, oder SiC-Keramik. Um den Gesamtwiderstand der Elektrolytmembran gering zu halten, weist dieser Träger bevorzugt eine sehr große Porosität aber auch eine geringe Dicke von kleiner 1000 µm, vorzugsweise kleiner 500 µm und ganz besonders bevorzugt kleiner 200 µm auf. Vorzugsweise werden Träger verwendet, die verwobene Fasern aus Glas oder Quarz aufweisen, wobei die Gewebe vorzugsweise aus 11-Tex-Garnen mit 5-50 Kett- bzw. Schussfäden und bevorzugt 20-28 Kett- und 28-36 Schussfäden bestehen. Ganz bevorzugt werden 5,5-Tex Game mit 10-50 Kett- bzw. Schussfäden und bevorzugt 20-28 Kett- und 28 -36 Schussfäden verwendet.

Wie zuvor dargelegt können Träger aus Geweben, Vliesen oder porösen Materialien verwendet werden. Poröse Materialien können sind insbesondere auf Basis von organischen oder anorganischen Schäumen bekannt.

Bevorzugte Träger sind ohne Sperrschicht für Mineralsäuren durchlässig. Diese Eigenschaft lässt sich durch den in den Beispielen dargelegten Versuch zur Sperrwirkung nachweisen. Gemäß einem besonderen Aspekt der vorliegenden Erfindung wird mindestens 5% einer sich im flächigen Gebilde befindlichen Mineralsäure innerhalb von 1 Stunde freigesetzt, falls das flächige Material einem großen Überschuss von Wasser (mindestens 100fache Menge, bezogen auf das Gewicht der Folie) ausgesetzt wird, das eine Temperatur von 80°C aufweist.

Je nach Anwendungsgebiet kann das flächige Gebilde gemäß Schritt A) hochtemperaturstabil sein. Hochtemperaturstabil bedeutet, dass der Träger bei einer Temperatur von mindestens 150°C, vorzugsweise mindestens 200°C und besonders bevorzugt mindestens 250°C stabil ist. Stabil bedeutet, dass die wesentlichen Eigenschaften des Trägers beibehalten werden. So tritt keine Änderung der mechanischen Eigenschaften oder der chemischen Zusammensetzung bei einem Aussetzen des flächigen Materials für mindestens 1 Stunde ein.

Der Träger ist im Allgemeinen chemisch inert. Chemisch inert bedeutet, dass ein mit einer Mineralsäure dotiertes flächiges Material beständig ist. Beständig bedeutet, dass das Material durch die Säure nicht zersetzt wird. So zeigt das Material nach 100 Stunden mindestens 95% der mechanischen Eigenschaften, die das Material zu beginn der Messung aufwies. Dies gilt beispielsweise für das E-Modul und die Mikrohärte.

Als mit Mineralsäure dotierte basische Polymermembran kommen nahezu alle bekannten Polymermembranen in Betracht, bei denen die Protonen ohne zusätzliches Wasser, z.B. mittels des sogenannten Grotthus Mechanismus, transportiert werden.

Als basisches Polymer im Sinne der vorliegenden Erfindung wird ein basisches Polymer mit mindestens einem Stickstoffatom in einer Wiederholungseinheit verwendet.

Die Wiederholungseinheit im basischen Polymer enthält vorzugsweise einen aromatischen Ring mit mindestens einem Stickstoffatom. Bei dem aromatischen Ring handelt es sich vorzugsweise um einen fünf- oder sechsgliedrigen Ring mit eins bis drei Stickstoffatomen, der mit einem anderen Ring, insbesondere einem anderen aromatischen Ring, anelliert sein kann.

Polymere auf Basis von Polyazol enthalten im allgemeinen wiederkehrende Azoleinheiten der allgemeinen Formel (I) und/oder (II) und/oder (III) und/oder (IV) und/oder (V) und/oder (VI) und/oder (VII) und/oder (VIII) und/oder (IX) und/oder (X) und/oder (XI) und/oder (XII) und/oder (XIII) und/oder (XIV) und/oder (XV) und/oder (XVI) und/oder (XVII) und/oder (XVIII) und/oder (XIX) und/oder (XX) und/oder (XXI) und/oder (XXII) 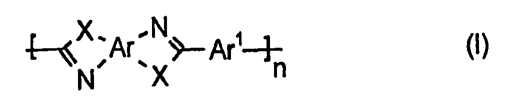 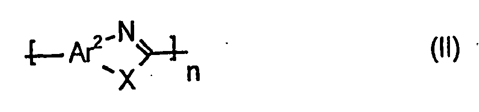 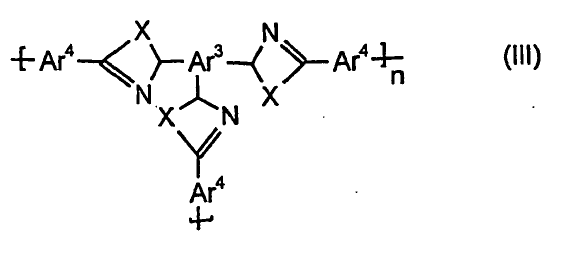 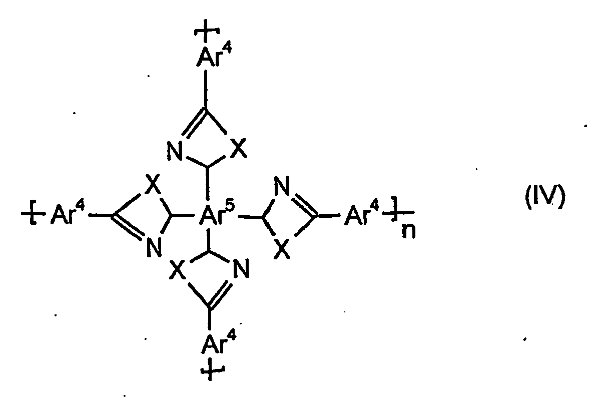 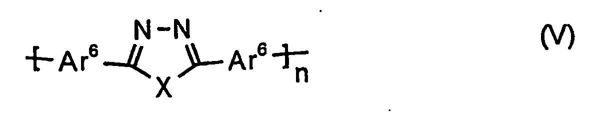 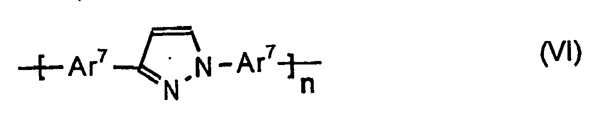 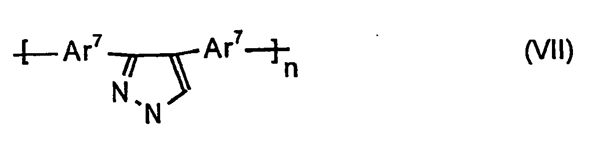 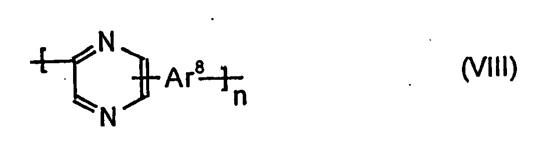 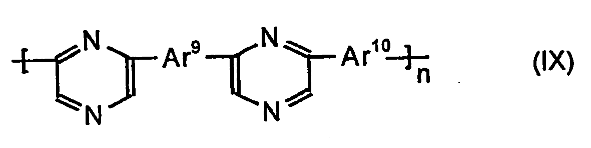 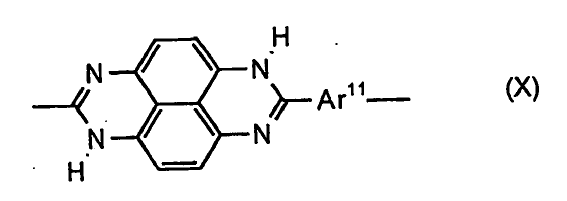 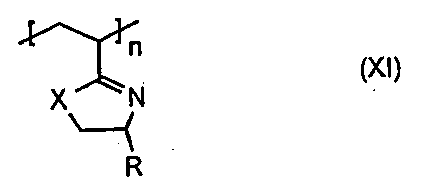 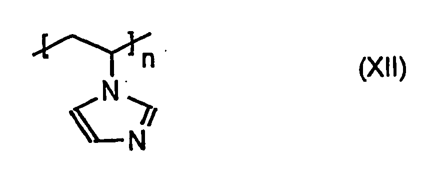 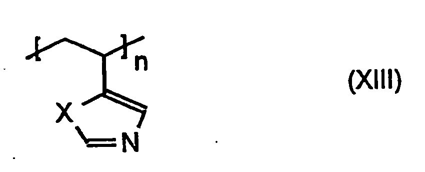 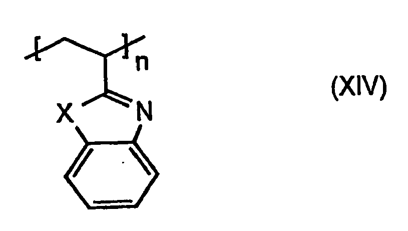 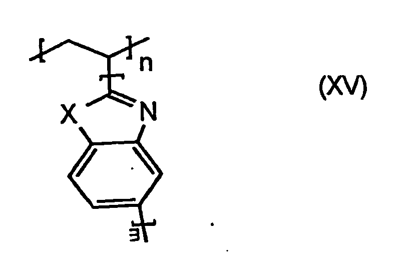 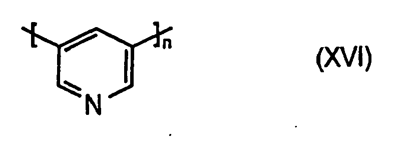 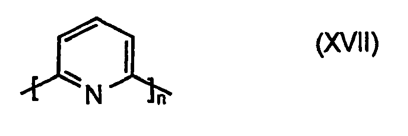 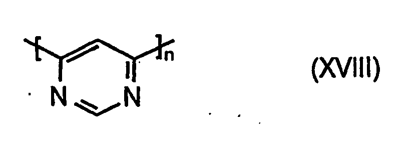 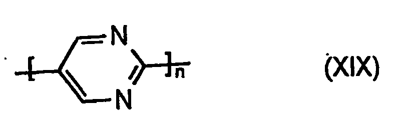 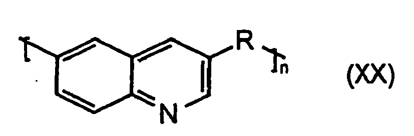 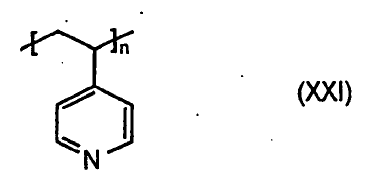 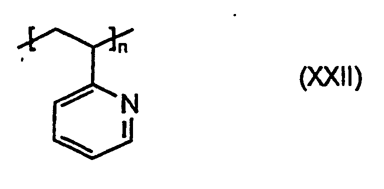 worin
- Ar: gleich oder verschieden sind und für eine vierbindige aromatische oder heteroaromatische Gruppe, die ein- oder mehrkernig sein kann,
- Ar¹: gleich oder verschieden sind und für eine zweibindige aromatische oder heteroaromatische Gruppe, die ein- oder mehrkernig sein kann,
- Ar²: gleich oder verschieden sind und für eine zwei oder dreibindige aromatische oder heteroaromatische Gruppe, die ein- oder mehrkernig sein kann,
- Ar³: gleich oder verschieden sind und für eine dreibindige aromatische oder heteroaromatische Gruppe, die ein- oder mehrkernig sein kann,
- Ar⁴: gleich oder verschieden sind und für eine dreibindige aromatische oder heteroaromatische Gruppe, die ein- oder mehrkernig sein kann,
- Ar⁵: gleich oder verschieden sind und für eine vierbindige aromatische oder heteroaromatische Gruppe, die ein- oder mehrkernig sein kann,
- Ar⁶: gleich oder verschieden sind und für eine zweibindige aromatische oder heteroaromatische Gruppe, die ein- oder mehrkernig sein kann,
- Ar⁷: gleich oder verschieden sind und für eine zweibindige aromatische oder heteroaromatische Gruppe, die ein- oder mehrkernig sein kann,
- Ar⁸: gleich oder verschieden sind und für eine dreibindige aromatische oder heteroaromatische Gruppe, die ein- oder mehrkernig sein kann,
- Ar⁹: gleich oder verschieden sind und für eine zwei- oder drei- oder vierbindige aromatische oder heteroaromatische Gruppe, die ein- oder mehrkernig sein kann,
- Ar¹⁰: gleich oder verschieden sind und für eine zwei- oder dreibindige aromatische oder heteroaromatische Gruppe, die ein- oder mehrkernig sein kann,
- Ar¹¹: gleich oder verschieden sind und für eine zweibindige aromatische oder heteroaromatische Gruppe, die ein- oder mehrkernig sein kann,
- X: gleich oder verschieden ist und für Sauerstoff, Schwefel oder eine Aminogruppe, die ein Wasserstoffatom, eine 1- 20 Kohlenstoffatome aufweisende Gruppe, vorzugsweise eine verzweigte oder nicht verzweigte Alkyl- oder Alkoxygruppe, oder eine Arylgruppe als weiteren Rest trägt
- R: gleich oder verschieden für Wasserstoff, eine Alkylgruppe und eine aromatische Gruppe steht und
- n, m: eine ganze Zahl größer gleich 10, bevorzugt größer gleich 100 ist.

Erfindungsgemäß bevorzugte aromatische oder heteroaromatische Gruppen leiten sich von Benzol, Naphthalin, Biphenyl, Diphenylether, Diphenylmethan, Diphenyldimethylmethan, Bisphenon, Diphenylsulfon, Thiophen, Furan, Pyrrol, Thiazol, Oxazol, Imidazol, Isothiazol, Isoxazol, Pyrazol, 1,3,4-Oxadiazol, 2,5-Diphenyl-1,3,4-oxadiazol, 1,3,4-Thiadiazol, 1,3,4-Triazol, 2,5-Diphenyl-1,3,4-triazol, 1,2,5-Triphenyl-1,3,4-triazol, 1,2,4-Oxadiazol, 1,2,4-Thiadiazol, 1,2,4-Triazol, 1,2,3-Triazol, 1,2,3,4-Tetrazol, Benzo[b]thiophen, Benzo[b]furan, Indol, Benzo[c]thiophen, Benzo[c]furan, Isoindol, Benzoxazol, Benzothiazol, Benzimidazol, Benzisoxazol, Benzisothiazol, Benzopyrazol, Benzothiadiazol, Benzotriazol, Dibenzofuran, Dibenzothiophen, Carbazol, Pyridin, Bipyridin, Pyrazin, Pyrazol, Pyrimidin, Pyridazin, 1,3,5-Triazin, 1,2,4-Triazin, 1,2,4,5-Triazin, Tetrazin, Chinolin, Isochinolin, Chinoxalin, Chinazolin, Cinnolin, 1,8-Naphthyridin, 1,5-Naphthyridin, 1,6-Naphthyridin, 1,7-Naphthyridin, Phthalazin, Pyridopyrimidin, Purin, Pteridin oder Chinolizin, 4H-Chinolizin, Diphenylether, Anthracen, Benzopyrrol, Benzooxathiadiazol, Benzooxadiazol, Benzopyridin, Benzopyrazin, Benzopyrazidin, Benzopyrimidin, Benzotriazin, Indolizin, Pyridopyridin, Imidazopyrimidin, Pyrazinopyrimidin, Carbazol, Aciridin, Phenazin, Benzochinolin, Phenoxazin, Phenothiazin, Acridizin, Benzopteridin, Phenanthrolin und Phenanthren ab, die gegebenenfalls auch substituiert sein können.

Dabei ist das Substitionsmuster von Ar¹, Ar⁴, Ar⁶, Ar⁷, Ar⁸, Ar⁹, Ar¹⁰, Ar¹¹ beliebig, im Falle vom Phenylen beispielsweise kann Ar¹, Ar⁴, Ar⁶, Ar⁷, Ar⁸, Ar⁹, Ar¹⁰, Ar¹¹ ortho-, meta- und para-Phenylen sein. Besonders bevorzugte Gruppen leiten sich von Benzol und Biphenylen, die gegebenenfalls auch substituiert sein können, ab.

Bevorzugte Alkylgruppen sind kurzkettige Alkylgruppen mit 1 bis 4 Kohlenstoffatomen, wie z. B. Methyl-, Ethyl-, n- oder i-Propyl- und t-Butyl-Gruppen.

Bevorzugte aromatische Gruppen sind Phenyl- oder Naphthyl-Gruppen. Die Alkylgruppen und die aromatischen Gruppen können substituiert sein.

Bevorzugte Substituenten sind Halogenatome wie z. B. Fluor, Aminogruppen, Hydroxygruppen oder kurzkettige Alkylgruppen wie z. B. Methyl- oder Ethylgruppen.

Bevorzugt sind Polyazole mit wiederkehrenden Einheiten der Formel (I) bei denen die Reste X innerhalb einer wiederkehrenden Einheit gleich sind.

Die Polyazole können grundsätzlich auch unterschiedliche wiederkehrende Einheiten aufweisen, die sich beispielsweise in ihrem Rest X unterscheiden. Vorzugsweise jedoch weist es nur gleiche Reste X in einer wiederkehrenden Einheit auf.

Weitere bevorzugte Polyazol-Polymere sind Polyimidazole, Polybenzthiazole, Polybenzoxazole, Polyoxadiazole, Polyquinoxalines, Polythiadiazole Poly(pyridine), Poly(pyrimidine), und Poly(tetrazapyrene).

In einer weiteren Ausführungsform der vorliegenden Erfindung ist das Polymer enthaltend wiederkehrende Azoleinheiten ein Copolymer oder ein Blend, das mindestens zwei Einheiten der Formel (I) bis (XXII) enthält, die sich voneinander unterscheiden. Die Polymere können als Blockcopolymere (Diblock, Triblock), statistische Copolymere, periodische Copolymere und/oder alternierende Polymere vorliegen.

In einer besonders bevorzugten Ausführungsform der vorliegenden Erfindung ist das Polymer enthaltend wiederkehrende Azoleinheiten ein Polyazol, das nur Einheiten der Formel (I) und/oder (II) enthält.

Die Anzahl der wiederkehrende Azoleinheiten im Polymer ist vorzugsweise eine ganze Zahl größer gleich 10. Besonders bevorzugte Polymere enthalten mindestens 100 wiederkehrende Azoleinheiten.

Im Rahmen der vorliegenden Erfindung sind Polymere enthaltend wiederkehrenden Benzimidazoleinheiten bevorzugt. Einige Beispiele der äußerst zweckmäßigen Polymere enthaltend wiederkehrenden Benzimidazoleinheiten werden durch die nachfolgende Formeln wiedergegeben: 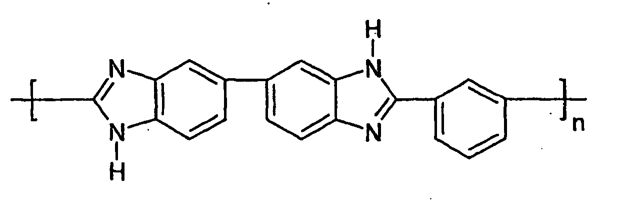 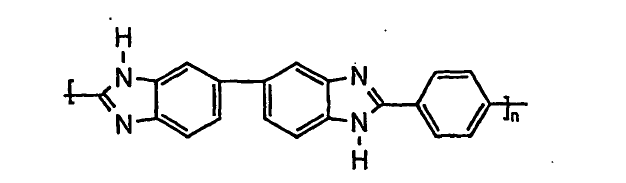 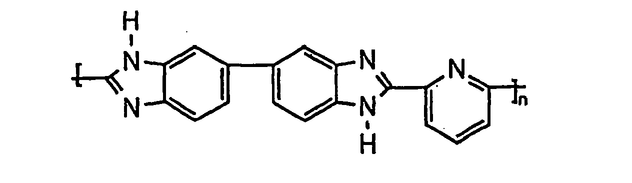 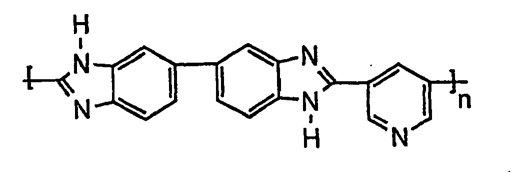 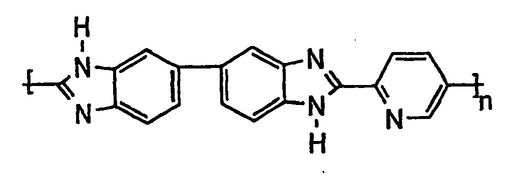 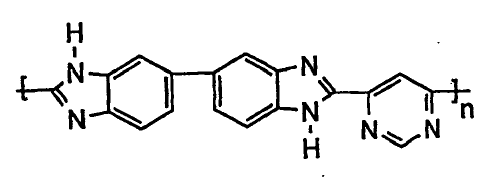 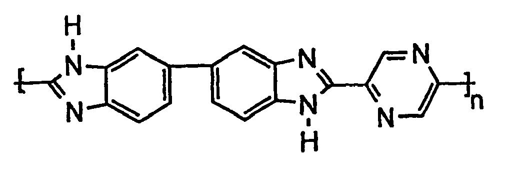 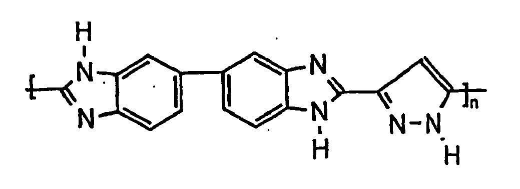 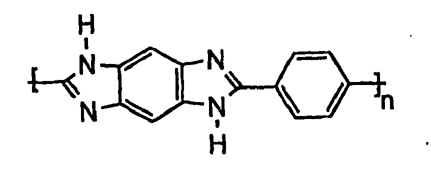 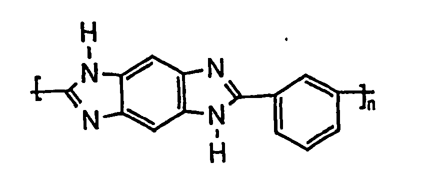 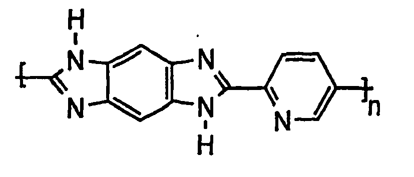 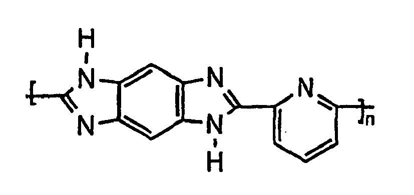 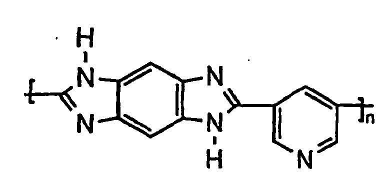 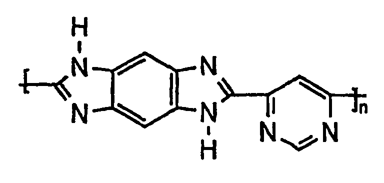 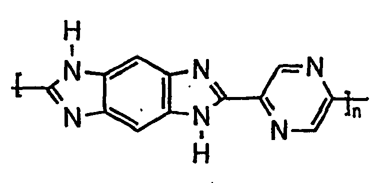 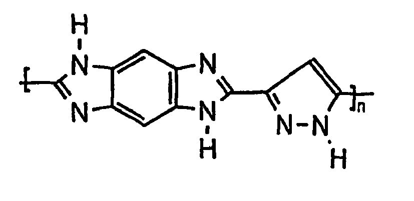 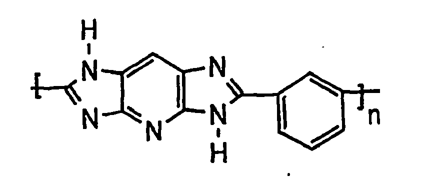 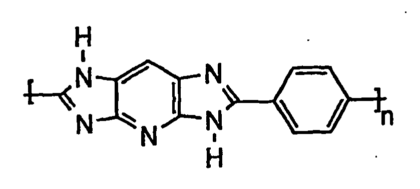 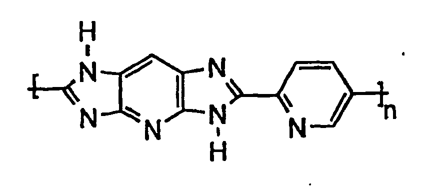 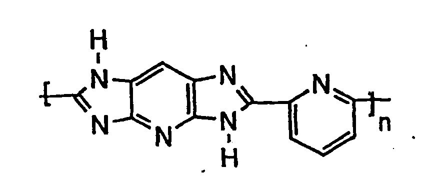 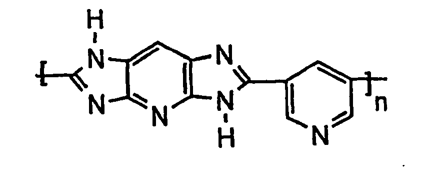 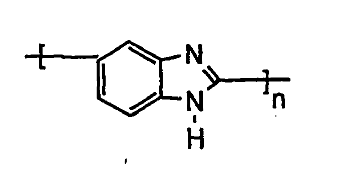 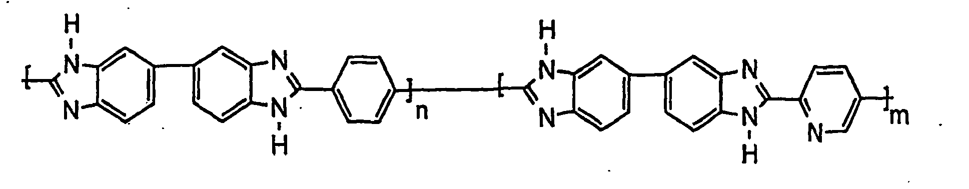 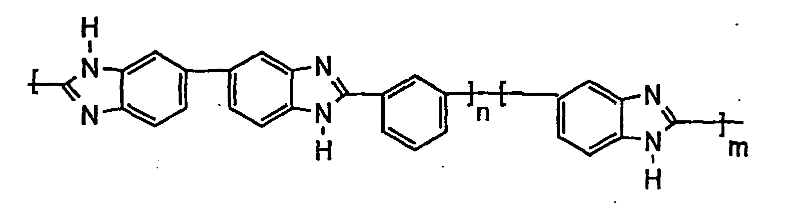 wobei n und m eine ganze Zahl größer gleich 10, vorzugsweise größer gleich 100 ist.

Weitere bevorzugte Polyazol-Polymere sind Polyimidazole, Polybenzimidazoletherketon, Polybenzthiazole, Polybenzoxazole, Polytriazole, Polyoxadiazole, Polythiadiazole, Polypyrazole, Polyquinoxalines, Poly(pyridine), Poly(pyrimidine), und Poly(tetrazapyrene).

Bevorzugte Polyazole zeichnen sich durch ein hohes Molekulargewicht aus. Dies gilt insbesondere für die Polybenzimidazole. Gemessen als Intrinsische Viskosität liegt diese im Bereich von 0,3 bis 10 dl/g, vorzugsweise 1 bis 5 dl/g.

Besonders bevorzugt ist Celazole der Fa. Celanese. Die Eigenschaften der Polymerfolie und Polymermembran können durch Sieben des Ausgangspolymers, wie in der deutschen Patentanmeldung Nr. 10129458 beschrieben, verbessert werden.

Die zur Dotierung eingesetzte Polymerfolie auf Basis von basischen Polymeren kann noch weitere Zusätze an Füll- und/oder Hilfsstoffen aufweisen. Zusätzlich kann der Polymerfilm weitere Modifizierungen, beispielsweise durch Vernetzung wie in der deutschen Patentanmeldung Nr. 10110752 oder in WO 00/44816 aufweisen. In einer bevorzugten Ausführungsform enthält die zur Dotierung eingesetzte Polymerfolie aus einem basischen Polymer und mindestens einer Blendkomponente zusätzlich einem Vernetzer wie in der deutschen Patentanmeldung Nr. 10140147 beschrieben. Wesentlicher Vorteil eines solchen Systems ist die Tatsache dass höhere Dotierungsgrade und somit höhere Leitfähigkeit bei ausreichender mechanischer Membranstabilität erzielt werden können.

Neben den vorstehend genannten basischen Polymeren kann auch ein Blend aus einem oder mehreren basischen Polymeren mit einem weiteren Polymer eingesetzt werden. Die Blendkomponente hat dabei im Wesentlichen die Aufgabe die mechanischen Eigenschaften zu verbessern und die Materialkosten zu verringern. Eine bevorzugte Blendkomponente ist dabei Polyethersulfon wie in der deutschen Patentanmeldung Nr. 10052242 beschrieben.

Zu den bevorzugten Polymeren, die als Blenkomponente eingesetzt werden können, gehören unter anderem Polyolefine, wie Poly(cloropren), Polyacetylen, Polyphenylen, Poly(*p*-xylylen), Polyarylmethylen, Polyarmethylen, Polystyrol, Polymethylstyrol, Polyvinylalkohol, Polyvinylacetat, Polyvinylether, Polyvinylamin, Poly(N-vinylacetamid), Polyvinylimidazol, Polyvinylcarbazol, Polyvinylpyrrolidon, Polyvinylpyridin, Polyvinylchlorid, Polyvinylidenchlorid, Polytetrafluorethylen, Polyhexafluorpropylen, Copolymere von PTFE mit Hexafluoropropylen, mit Perfluorpropylvinylether, mit Trifluoronitrosomethan, mit Sulfonylfluoridvinylether, mit Carbalkoxy-perfluoralkoxyvinylether, Polychlortrifluorethylen, Polyvinylfluorid, Polyvinylidenfluorid, Polyacrolein, Polyacrylamid, Polyacrylnitril, Polycyanacrylate, Polymethacrylimid, Cycloolefinische Copolymere, insbesondere aus Norbornen; Polymere mit C-O-Bindungen in der Hauptkette, beispielsweise Polyacetal, Polyoxymethylen, Polyether, Polypropylenoxid, Polyepichlorhydrin, Polytetrahydrofuran, Polyphenylenoxid, Polyetherketon, Polyester, insbesondere Polyhydroxyessigsäure, Polyethylenterephthalat, Polybutylenterephthalat, Polyhydroxybenzoat, Polyhydroxypropionsäure, Polypivalolacton, Polycaprolacton, Polymalonsäure, Polycarbonat;
Polymere C-S-Bindungen in der Hauptkette, beispielsweise Polysulfidether, Polyphenylensulfid, Polyethersulfon;
Polymere C-N-Bindungen in der Hauptkette, beispielsweise Polyimine, Polyisocyanide,Polyetherimin, Polyanilin, Polyamide, Polyhydrazide, Polyurethane, Polyimide, Polyazole, Polyazine;
Flüssigkristalline Polymere, insbesondere Vectra sowie Anorganische Polymere, beispielsweise Polysilane, Polycarbosilane, Polysiloxane, Polykieselsäure, Polysilikate, Silicone, Polyphosphazene und Polythiazyl.

Zur Anwendung in Brennstoffzellen mit einer Dauergebrauchstemperatur oberhalb 100°C werden solche Blend-Polymere bevorzugt, die eine Glasübergangstemperatur oder Vicat-Erweichungstemperatur VST/A/50 von mindestens 100°C, bevorzugt mindestens 150°C und ganz besonders bevorzugt mindestens 180°C haben.

Hierbei sind Polysulfone mit einer Vicat-Erweichungstemperatur VST/A/50 von 180°C bis 230°C bevorzugt.

Zu den bevorzugten Polymeren gehören Polysulfone, insbesondere Polysulfon mit Aromaten in der Hauptkette. Gemäß einem besonderen Aspekt der vorliegenden Erfindung weisen bevorzugte Polysulfone und Polyethersulfone eine Schmelzvolumenrate MVR 300/21,6 kleiner oder gleich 40 cm³/10 min, insbesondere kleiner oder gleich 30 cm³/10 min und besonders bevorzugt kleiner oder gleich 20 cm³/10 min gemessen nach ISO 1133 auf.

Zur weiteren Verbesserung der anwendungstechnischen Eigenschaften kann das flächige Material Füllstoffe, insbesondere protonenleitende Füllstoffe, aufweisen.

Nicht limitierende Beispiele für Protonenleitende Füllstoffe sind

| | |
|---|---|
| Sulfate wie: | CsHSO₄, Fe(SO₄)₂, (NH₄)₃H(SO₄)₂, LiHSO₄, NaHSO₄, KHSO₄, RbSO₄, LiN₂H₅SO₄, NH₄HSO₄, |
| Phosphate wie | Zr₃(PO₄)₄, Zr(HPO₄)₂, HZr₂(PO₄)₃, UO₂PO₄.3H₂O, H₈UO₂PO₄, Ce(HPO₄)₂, Ti(HPO₄)₂, KH₂PO₄, NaH₂PO₄, LiH₂PO₄, NH₄H₂PO₄, CsH₂PO₄, CaHPO₄, MgHPO₄, HSbP₂O₈, HSb₃P₂O₁₄, H₅Sb₅P₂O₂₀, |
| Polysäure wie | H₃PW₁₂O₄₀.nH₂O (n=21-29), H₃SiW₁₂O₄₀.nH₂O (n=21-29), HₓWO₃, HSbWO₆, H₃PMo₁₂O₄₀, H₂Sb₄O₁₁, HTaWO₆, HNbO₃, HTiNbO₅, HTiTaO₅, HSbTeO₆, H₅Ti₄O₉, HSbO₃, H₂MoO₄ |
| Selenite und Arsenide wie | (NH₄)₃H(SeO₄)₂, UO₂AsO₄, (NH₄)₃H(SeO₄)₂, KH₂AsO₄, Cs₃H(SeO₄)₂, Rb₃H(SeO₄)₂, |
| Oxide wie Silikate wie | Al₂O₃, Sb₂O₅, ThO₂, SnO₂, ZrO₂, MoO₃ Zeolithe, Zeolithe(NH₄+), Schichtsilikate, Gerüstsilikate, H-Natrolite, H-Mordenite, NH₄-Analcine, NH₄-Sodalite, NH₄-Gallate, H-Montmorillonite |
| Säuren wie | HClO₄, SbF₅ |
| Füllstoffe wie | Carbide, insbesondere SiC, Si₃N₄, Fasern, insbesondere Glasfasern, Glaspulvern und/oder Polymerfasern, bevorzugt auf Basis von Polyazolen. |

Diese Additive können in der protonenleitenden Polymermembran in üblichen Mengen enthalten sein, wobei jedoch die positiven Eigenschaften, wie hohe Leitfähigkeit, hohe Lebensdauer und hohe mechanische Stabilität der Membran durch Zugabe von zu großen Mengen an Additiven nicht allzu stark beeinträchtigt werden sollten. Im allgemeinen umfasst die Membran höchstens 80 Gew.-%, vorzugsweise höchstens 50 Gew.-% und besonders bevorzugt höchstens 20 Gew.-% Additive.

Zur Herstellung der Polymerfolie werden die Polymerbestandteile zunächst wie in vorstehend zitierten Anmeldungen, beispielsweise DE Nr. 10110752 oder WO 00/44816, beschrieben gelöst bzw. suspendiert und anschließend zur Herstellung der Polymerfolien eingesetzt. Des weiteren können die Polymerfolien gemäß DE Nr. 10052237 kontinuierlich hergestellt werden.

Alternativ dazu kann die Folienbildung gemäß dem in der japanischen Anmeldung Nr. Hei 10-125560 beschriebenen Verfahren erfolgen.

Hierbei wird die Lösung in einen Zylinder mit zylinderförmiger Innenfläche gegossen, und anschließend der Zylinder in Drehung versetzt wird. Gleichzeitig läßt man das Lösungsmittel durch die durch die Drehung verursachte Zentrifugalkraft abdampfen; wobei sich auf der Innenfläche des Zylinders eine zylindrische Polymerfolie weitgehend einheitlicher Dicke bildet.

Mit diesem Verfahren kann das basische Polymer mit einer einheitlichen Matrix ausgebildet werden.

Dieses in der japanischen Patentanmeldung Hei 10-125560 beschriebene Verfahren ist ebenfalls Bestandteil der vorliegenden Beschreibung.

Anschließend wird das Lösungsmittel entfernt. Dies kann mittel dem Fachmann bekannter Methoden geschehen, beispielsweise durch Trocknung.

Anschließend wird die Folie aus basischem Polymer oder Polymerblend mit einer starken Säure, vorzugsweise einer Mineralsäure, imprägniert bzw. dotiert, wobei die Folie wie in der deutschen Patentanmeldung Nr. 10109829 beschrieben zuvor behandelt werden kann. Diese Variante ist vorteilhaft um Wechselwirkungen des Restlösemittels mit der Sperrschicht auszuschließen.

Hierzu wird die Folie aus basischem Polymer oder Polymerblend in eine starke Säure eingetaucht werden, so daß die Folie mit der starken Säure imprägniert und zur protonenleitenden Membran wird. Hierzu wird das basische Polymer üblicherweise in eine hochkonzentrierte starke Säure mit einer Temperatur von mindestens 35°C über einen Zeitraum von mehreren Minuten bis zu mehreren Stunden eingetaucht

Als starke Säure verwendet man Mineralsäure, insbesondere Phosphorsäure und/oder Schwefelsäure.

Im Rahmen der vorliegenden Beschreibung versteht man unter "Phosphorsäure" Polyphosphorsäure (Hₙ₊₂PₙO₃ₙ₊₁ (n>1) besitzen üblicherweise einen Gehalt berechnet als P₂O₅ (acidimetrisch) von mindestens 83%), Phosphonsäure (H₃PO₃), Orthophosphorsäure (H₃PO₄), Pyrophosphorsäure (H₄P₂O₇), Triphosphorsäure (H₅P₃O₁₀) und Metaphosphorsäure. Die Phosphorsäure, insbesondere Orthophosphorsäure, hat vorzugsweise eine Konzentration von mindestens 80 Gewichtsprozent, besonders bevorzugt eine Konzentration von mindestens 85 Gewichtsprozent, noch weiter bevorzugt eine Konzentration von mindestens 87 Gewichtsprozent und ganz besonders bevorzugt eine Konzentration von mindestens 89 Gewichtsprozent. Der Grund dafür ist darin zu sehen, daß das basische Polymer bei zunehmender Konzentration der starken Säure mit einer größeren Zahl von Molekülen starker Säure imprägniert werden kann.

Die erhaltene Polymerelektrolytmembran, nämlich der Komplex aus dem basischen Polymer und der starken Säure, ist protonenleitend. Nach der Dotierung soll der Dotierungsgrad ausgedrückt als Mol Säure pro Wiederholungseinheit grösser als 6, vorzugsweise grösser als 8 und ganz besonders bevorzugt grösser als 9 sein.

Anstelle der mittels klassischer Verfahren hergestellten Polymermembranen auf Basis von basischen Polymeren können auch die polyazolhaltigen Polymermembranen wie in den deutschen Patentanmeldungen Nr. 10117686, 10144815, 10117687 beschrieben, eingesetzt werden. Derartige, mit mindestens einer Sperrschicht versehene Polymerelektrolytmembranen sind ebenfalls Gegenstand der vorliegenden Erfindung.

Entsprechend können erfindungsgemäße flächige Materialien durch ein Verfahren erhalten werden umfassend die Schritte
i) Herstellung einer Mischung umfassend
   Polyphosphorsäure,
   mindestens ein Polyazol und/oder mindestens ein oder mehrere Verbindungen, die unter Einwirkung von Wärme gemäß Schritt ii) zur Bildung von Polyazolen geeignet sind,
ii) Erwärmen der Mischung erhältlich gemäß Schritt i) unter Inertgas auf Temperaturen von bis zu 400°C,
iii) Aufbringen einer Schicht unter Verwendung der Mischung gemäß Schritt i)
   und/oder ii) auf einem Träger,
iv) Behandlung der in Schritt iii) gebildeten Membran.

Hierzu können der Mischung gemäß Schritt i) ein oder mehrere Verbindungen beigefügt werden, die unter Einwirkung von Wärme gemäß Schritt ii) zur Bildung von Polyazolen geeignet sind.

Hierzu sind Mischungen geeignet, die ein oder mehreren aromatische und/oder heteroaromatische Tetra-Amino-Verbindungen und eine oder mehrere aromatische und/oder heteroaromatische Carbonsäuren oder deren Derivate, die mindestens zwei Säuregruppen pro Carbonsäure-Monomer umfassen. Des weiteren können ein oder mehrere aromatische und/oder heteroaromatische Diaminocarbonsäuren zur Herstellung von Polyazolen eingesetzt werden.

Zu den aromatischen und heteroaromatischen Tetra-Amino-Verbindungen gehören unter anderem 3,3',4,4'-Tetraaminobiphenyl, 2,3,5,6-Tetraaminopyridin, 1,2,4,5-Tetraaminobenzol, 3,3',4,4'-Tetraaminodiphenylsulfon, 3,3',4,4'-Tetraaminodiphenylether, 3,3',4,4'-Tetraaminobenzophenon, 3,3',4,4'-Tetraaminodiphenylmethan und 3,3',4,4'-Tetraaminodiphenyldimethylmethan sowie deren Salze, insbesondere deren Mono-, Di-, Tri- und Tetrahydrochloridderivate. Hiervon sind 3,3',4,4'-Tetraaminobiphenyl, 2,3,5,6-Tetraaminopyridin und 1,2,4,5-Tetraaminobenzol besonders bevorzugt.

Des weiteren kann die Mischung A) aromatische und/oder heteroaromatische Carbonsäuren umfassen. Hierbei handelt es sich um Dicarbonsäuren und Tricarbonsäuren und Tetracarbonsäuren bzw. deren Estern oder deren Anhydride oder deren Säurehalogenide, insbesondere deren Säurehalogenide und/oder Säurebromide. Vorzugsweise handelt es sich bei den aromatischen Dicarbonsäuren um Isophthalsäure, Terephthalsäure, Phthalsäure, 5-Hydroxyisophthalsäure, 4-Hydroxyisophthalsäure, 2-Hydroxyterephthalsäure, 5-Aminoisophthalsäure, 5-N,N-Dimethylaminoisophthalsäure, 5-N,N-Diethylaminoisophthalsäure, 2,5-Dihydroxyterephthalsäure, 2,6-Dihydroxyisophthalsäure, 4,6-Dihydroxyisophthalsäure, 2,3-Dihydroxyphthalsäure, 2,4-Dihydroxyphthalsäure. 3,4-Dihydroxyphthalsäure, 3-Fluorophthalsäure, 5-Fluoroisophthalsäure, 2-Fluoroterphthalsäure, Tetrafluorophthalsäure, Tetrafluoroisophthalsäure, Tetrafluoroterephthalsäure,1,4-Naphthalindicarbonsäure, 1,5-Naphthalindicarbonsäure, 2,6-Naphthalindicarbonsäure, 2,7-Naphthalindicarbonsäure, Diphensäure, 1,8-dihydroxynaphthalin-3,6-dicarbonsäure, Diphenylether-4,4'-dicarbonsäure, Benzophenon-4,4'-dicarbonsäure, Diphenylsulfon-4,4'-dicarbonsäure, Biphenyl-4,4'-dicarbonsäure, 4-Trifluoromethylphthalsäure, 2,2-Bis(4-carboxyphenyl)hexafluoropropan, 4,4'-Stilbendicarbonsäure, 4-Carboxyzimtsäure, bzw. deren C1-C20-Alkyl-Ester oder C5-C12-Aryl-Ester, oder deren Säureanhydride oder deren Säurechloride.

Bei den heteroaromatischen Carbonsäuren handelt es sich um heteroaromatischen Dicarbonsäuren und Tricarbonsäuren und Tetracarbonsäuren bzw. deren Estern oder deren Anhydride. Als heteroaromatische Carbonsäuren werden aromatische Systeme verstanden welche mindestens ein Stickstoff, Sauerstoff, Schwefel oder Phosphoratom im Aromaten enthalten. Vorzugsweise handelt es sich um Pyridin-2,5-dicarbonsäure, Pyridin-3,5-dicarbonsäure, Pyridin-2,6-dicarbonsäure, pyridin-2,4-dicarbonsäure, 4-Phenyl-2,5-pyridindicarbonsäure, 3,5-Pyrazoldicarbonsäure, 2,6 - Pyrimidindicarbonsäure, 2,5-Pyrazindicarbonsäure, 2,4,6-Pyridintricarbonsäure, Benzimidazol-5,6-dicarbonsäure. Sowie deren C1-C20-Alkyl-Ester oder C5-C12-Aryl-Ester, oder deren Säureanhydride oder deren Säurechloride.

Des weiteren kann die Mischung i) auch aromatische und heteroaromatische Diaminocarbonsäuren enthalten. Zu diesen gehört unter anderem Diaminobenzoesäure, 4-Phenoxycarbonyl-3,'4'-diaminodiphenylether und deren Mono- und Dihydrochloridderivate.

Die in Schritt i) hergestellte Mischung umfasst vorzugsweise mindestens 0,5 Gew.-%, insbesondere 1 bis 30 Gew.-% und besonders bevorzugt 2 bis 15 Gew.-% Monomere zur Herstellung von Polyazolen.

Gemäß einem weiteren Aspekt der vorliegenden Erfindung umfasst die in Schritt A) hergestellte Mischung Verbindungen, die unter Einwirkung von Wärme gemäß Schritt B) zur Bildung von Polyazolen geeignet sind, wobei diese Verbindungen durch Umsetzung von einem oder mehreren aromatischen und/oder heteroaromatischen Tetra-Amino-Verbindungen mit einer oder mehreren aromatischen und/oder heteroaromatischen Carbonsäuren bzw. deren Derivate, die mindestens zwei Säuregruppen pro Carbonsäure-Monomer enthalten, oder von einer oder mehreren aromatischen und/oder heteroaromatischen Diaminocarbonsäuren in der Schmelze bei Temperaturen von bis zu 400°C, insbesondere bis zu 350°C, bevorzugt bis zu 280°C erhältlich sind. Die zur Herstellung dieser Präpolymere einzusetzenden Verbindungen wurden zuvor dargelegt.

Des weiteren können zur Herstellung von Polyazolen Monomere eingesetzt werden, die kovalent gebundene Säuregruppen umfassen. Hierzu gehören unter anderem aromatische und heteroaromatische Dicarbonsäuren bzw. deren Derivate, die mindestens eine Phosphonsäuregruppe aufweisen, beispielsweise 2,5-Dicarboxyphenylphosphonsäure, 2,3-Dicarboxyphenylphosphonsäure 3,4-Dicarboxyphenylphosphonsäure und 3,5-Dicarboxyphenylphosphonsäure; aromatische und heteroaromatische Dicarbonsäuren bzw. deren Derivate, die mindestens eine Sulfonsäuregruppe aufweisen, insbesondere 2,5-Dicarboxyphenylsulfonsäure, 2,3-Dicarboxyphenylsulfonsäure 3,4-Dicarboxyphenylsulfonsäure und 3,5-Dicarboxyphenylsulfonsäure; aromatische und heteroaromatische Diaminocarbonsäuren, die mindestens eine Phosphonsäuregruppe umfassen, beispielsweise 2,3-Diamino-5-carboxyphenylphosphonsäure, 2,3-Diamino-6-carboxyphenylphosphonsäure und 3,4-Diamino-6-carboxyphenylphosphonsäure; aromatische und heteroaromatische Diaminocarbonsäuren, die mindestens eine Sulfonsäuregruppe umfassen, beispielweise 2,3-Diamino-5-carboxyphenylsulfonsäure, 2,3-Diamino-6-carboxyphenylsulfonsäure und 3,4-Diamino-6-carboxyphenylsulfonsäure.

Eine gemäß dem zuvor dargelegten Verfahren hergestellte Polyazolmembran kann die zuvor dargelegten optionalen Komponenten enthalten. Hierzu gehören insbesondere Blend-Polymere und Füllstoffe. Blend-Polymere können in der gemäß Schritt i) und/oder Schritt ii) erhaltenen Mischung unter anderem gelöst, dispergiert oder suspendiert vorliegen. Hierbei liegt das Gewichtsverhältnis von Polyazol zu Polymer (B) vorzugsweise im Bereich von 0,1 bis 50, vorzugsweise von 0,2 bis 20, besonders bevorzugt von 1 bis 10, ohne dass hierdurch eine Beschränkung erfolgen soll. Falls das Polyazol erst in Schritt ii) gebildet wird, kann das Gewichtsverhältnis rechnerisch aus dem Gewicht der Monomeren zur Bildung des Polyazols erhalten werden, wobei die bei der Kondensation freigesetzten Verbindungen, beispielsweise Wasser zu berücksichtigen sind.

Zur weiteren Verbesserung der anwendungstechnischen Eigenschaften können der Membran zusätzlich noch Füllstoffe, insbesondere protonenleitende Füllstoffe, sowie zusätzliche Säuren zugesetzt werden. Die Zugabe kann beispielsweise bei Schritt i), Schritt ii) und/oder Schritt iii) erfolgen. Des weiteren können diese Additive, falls diese in flüssiger Form vorliegen, auch nach der Polymerisation gemäß Schritt iv) beigefügt werden. Diese Additive wurden zuvor beschrieben.

Bei der in Schritt i) verwendeten Polyphosphorsäure handelt es sich um handelsübliche Polyphosphorsäuren wie diese beispielsweise von Riedel-de Haen erhältlich sind. Die Polyphosphorsäuren Hₙ₊₂PₙO₃ₙ₊₁ (n>1) besitzen üblicherweise einen Gehalt berechnet als P₂O₅ (acidimetrisch) von mindestens 83%. Anstelle einer Lösung der Monomeren kann auch eine Dispersion/Suspension erzeugt werden. Die in Schritt i) erhaltene Mischung wird gemäß Schritt ii) auf eine Temperatur von bis zu 400°C, insbesondere 350°C, vorzugsweise bis zu 280°C, insbesondere 100°C bis 250°C und besonders bevorzugt im Bereich von 200°C bis 250°C erhitzt. Hierbei wird ein Inertgas, beispielsweise Stickstoff oder ein Edelgas, wie Neon, Argon, eingesetzt.

Die in Schritt i) und/oder Schritt ii) hergestellte Mischung kann zusätzlich noch organische Lösungsmittel enthalten. Diese können die Verarbeitbarkeit positiv beeinflussen. So kann beispielsweise die Rheologie der Lösung verbessert werden, so dass diese leichter extrudiert oder gerakelt werden kann.

Die Bildung des flächigen Gebildes gemäß Schritt iii) erfolgt mittels an sich bekannter Maßnahmen (Gießen, Sprühen, Rakeln, Extrusion) die aus dem Stand der Technik zur Polymerfilm-Herstellung bekannt sind. Als Träger sind alle unter den Bedingungen als inert zu bezeichnenden Träger geeignet. Zu diesen Trägern gehören insbesondere Folien aus Polyethylenterephthalat (PET), Polytetrafluorethylen (PTFE), Polyhexafluorpropylen, Copolymere von PTFE mit Hexafluoropropylen, Polyimiden, Polyphenylensulfiden (PPS) und Polypropylen (PP). Des weiteren kann die Bildung der Membran auch direkt auf der mit einer Sperrschicht versehenen Elektrode erfolgen.

Die Dicke des flächigen Gebildes gemäß Schritt iii) beträgt vorzugsweise zwischen 10 und 4000 µm, vorzugsweise zwischen 15 und 3500 µm, insbesondere zwischen 20 und 3000 µm, besonders bevorzugt zwischen 30 und 1500µm und ganz besonders bevorzugt zwischen 50 und 1200 µm.

Die Behandlung der Membran in Schritt iv) erfolgt insbesondere bei Temperaturen in Bereich von 0°C und 150°C, vorzugsweise bei Temperaturen zwischen 10°C und 120°C, insbesondere zwischen Raumtemperatur (20°C) und 90°C, in Gegenwart von Feuchtigkeit bzw. Wasser und/oder Wasserdampf. Die Behandlung erfolgt vorzugsweise unter Normaldruck, kann aber auch unter Einwirkung von Druck erfolgen. Wesentlich ist, daß die Behandlung in Gegenwart von ausreichender Feuchtigkeit geschieht, wodurch die anwesende Polyphosphorsäure durch partielle Hydrolyse unter Ausbildung niedermolekularer Polyphosphorsäure und/oder Phosphorsäure zur Verfestigung der Membran beiträgt.

Die partielle Hydrolyse der Polyphosphorsäure in Schritt iv) führt zu einer Verfestigung der Membran und zu einer Abnahme der Schichtdicke und Ausbildung einer Membran. Die verfestigte Membran hat im allgemeinen eihe Dicke zwischen 15 und 3000 µm, vorzugsweise 20 und 2000 µm, insbesondere zwischen 20 und 1500 µm.

Die obere Temperaturgrenze der Behandlung gemäß Schritt iv) beträgt in der Regel 150°C. Bei extrem kurzer Einwirkung von Feuchtigkeit, beispielsweise von überhitztem Dampf kann dieser Dampf auch heißer als 150°C sein. Wesentlich für die Temperaturobergrenze ist die Dauer der Behandlung.

Die partielle Hydrolyse (Schritt iv) kann auch in Klimakammem erfolgen bei der unter definierter Feuchtigkeitseinwirkung die Hydrolyse gezielt gesteuert werden kann. Hierbei kann die Feuchtigkeit durch die Temperatur bzw. Sättigung der kontaktierenden Umgebung beispielsweise Gase wie Luft, Stickstoff, Kohlendioxid oder andere geeignete Gase, oder Wasserdampf gezielt eingestellt werden. Die Behandlungsdauer ist abhängig von den vorstehend gewählten Parametern.

Weiterhin ist die Behandlungsdauer von der Dicke der Membran abhängig.

In der Regel beträgt die Behandlungsdauer zwischen wenigen Sekunden bis Minuten, beispielsweise unter Einwirkung von überhitztem Wasserdampf, oder bis hin zu ganzen Tagen, beispielsweise an der Luft bei Raumtemperatur und geringer relativer Luftfeuchtigkeit. Bevorzugt beträgt die Behandlungsdauer zwischen 10 Sekunden und 300 Stunden, insbesondere 1 Minute bis 200 Stunden.

Wird die partielle Hydrolyse bei Raumtemperatur (20°C) mit Umgebungsluft einer relativen Luftfeuchtigkeit von 40-80% durchgeführt beträgt die Behandlungsdauer zwischen 1 und 200 Stunden.

Die gemäß Schritt iv) erhaltene Membran kann selbsttragend ausgebildet werden, d.h. sie kann vom Träger ohne Beschädigung gelöst und anschließend gegebenenfalls direkt weiterverarbeitet werden.

Die Behandlung gemäß Schritt iv) führt zu einer Härtung der Beschichtung. Falls die Membran direkt auf der Elektrode gebildet wird, erfolgt die Behandlung gemäß Schritt D) solange, bis die Beschichtung eine genügende Härte aufweist, um zu einer Membran-Elektroden-Einheit verpresst werden zu können. Eine genügende Härte ist gegeben, wenn eine entsprechend behandelte Membran selbsttragend ist. In vielen Fällen genügt jedoch eine geringere Härte. Die gemäß DIN 50539 (Mikrohärtemessung) bestimmte Härte beträgt im allgemeinen mindestens 1 mN/mm², bevorzugt mindestens 5 mN/mm² und ganz besonders bevorzugt mindestens 50 mN/mm², ohne dass hierdurch eine Beschränkung erfolgen soll.

Über den Grad der Hydrolyse, d.h. die Dauer, Temperatur und Umgebungsfeuchtigkeit, ist die Konzentration und die Menge an Phosphorsäure und damit die Leitfähigkeit der erfindungsgemäßen Polymermembran einstellbar. Erfindungsgemäß wird die Konzentration der Phosphorsäure als Mol Säure pro Mol Wiederholungseinheit des Polymers angegeben. Im Rahmen der vorliegenden Erfindung ist eine Konzentration (Mol Phosporsäure bezogen auf eine Wiederholeinheit der Formel (III), d.h. Polybenzimidazol) zwischen 10 und 80, insbesondere zwischen 12 und 60, bevorzugt. Derartig hohe Dotierungsgrade (Konzentrationen) sind durch Dotieren von Polyazolen mit kommerziell erhältlicher ortho-Phosphorsäure nur sehr schwierig bzw. gar nicht zugänglich.

Die Dicke der Sperrschicht einer erfindungsgemäßen mehrschichtige Polymerelektrolytmembran ist im allgemeinen unkritisch, solange diese Schicht eine ausreichende Sperrwirkung gegenüber Mineralsäuren aufweist. Die Sperrwirkung kann über die durch Wasser auswaschbare Menge an Mineralsäure festgestellt werden. Gemäß einem besonderen Aspekt der vorliegenden Erfindung tritt innerhalb einer Stunde höchstens 10%, vorzugsweise höchstens 5% der Mineralsäure in die wässrige Phase über. Diese Werte beziehen sich auf das Gewicht an Mineralsäure bzw. des Gewicht der mit der Mineralsäure flächigen Materials, wobei zur Berechnung des Wertes jeweils die Fläche berücksichtigt wird, die mit Wasser in Kontakt steht.

Gemäß einer besonderen Ausführungsform der vorliegenden Erfindung ist die Dicke der Sperrschicht kleiner als 10 µm, vorzugsweise 1 bis 8 µm und besonders bevorzugt 2 bis 6µm. Vorteilhaft an derartige Sperrschichten ist deren relativ geringer Widerstand.

Gemäße einer weiteren Ausführungsform der vorliegenden Erfindung beträgt die Dicke der Sperrschicht mindestens 10 µm, vorzugsweise liegt die Dicke im Bereich von 10µm bis 30µm. Vorteilhaft an derartigen Sperrschichten ist deren besonders hohe Sperrwirkung sowie deren Stabilität.

Die Dicke der Sperrschicht kann über Rasterelektronenmikroskopie (REM) gemessen werden. Hierbei ergibt sich die Dicke der Sperrschicht über den Mittelwert der Dicke, der über das Verhältnis von Fläche zu Länge der Sperrschicht erhalten wird.

Bei der erfindungsgemäßen Sperrschicht handelt es sich vorzugsweise um ein Kationenaustauscher-Material. Dieses Kationenaustauscher-Material erlaubt den Transport der Protonen nicht aber der Anionen wie z.B Phosphatanionen. Zur besseren Haftvermittlung können an der Grenzfläche zwischen Polymerelektrolytmembran und Kationenaustauschermaterial auch BlockCopolymeren bestehend aus Komponenten der Polymerelektrolytmembran und der Kationenaustauschermembran eingesetzt werden.

Diese Sperrschicht kann in Form einer separaten Folie, vorzugsweise selbsttragend, mit der dotierten Polymermembran bzw. der dotierten Polymerblendmembran verbunden (laminiert) werden.

Des weiteren kann die Sperrschicht auch durch Aufbringen einer Schicht auf die dotierte Membran und/oder die Elektrode erfolgen. Hierzu kann beispielsweise eine Mischung umfassend ein Kationenaustauschermaterial oder ein Precursormaterial auf die Membran und/oder die Elektrode aufgebracht werden. Geeignete Verfahren sind unter anderem Gießen, Sprühen, Rakeln und/oder Extrusion.

Die Sperrschicht kann des weiteren einen Gradienten aufweisen. So kann beispielsweise die Konzentration an Säuregruppen variiert werden. Derartige Gradienten können beispielsweise über (Energiedispersive Röntgenstreuung (EDX), ortsaufgelöste Ramanspektroskopie und ortsaufgelöste Infrarotspektroskopie gemessen werden.

In einer Variante der vorliegenden Erfindung kann - insofern das Kationenaustauscher-Material in Form einer selbsttragenden Folie vorliegt - dieses auch als separate Folie in einer MEE zwischen der dotierten Polymerelektrolytmembran und der Katalysatorschicht oder der Elektrode (auch beidseitig) eingebaut werden.

Es hat sich gezeigt, dass es vorteilhaft ist, wenn die Sperrschicht sich auf der Kathodenseite der Polymerelektrolytmembran befindet, da die Überspannung deutlich verringert wird. Neben dieser Ausführungsform kann die Sperrschicht jedoch auch beidseitig aufgebracht sein.

Wie bereits dargelegt unterliegt das Kationenaustauscher-Material keiner wesentlichen Einschränkung. Bevorzugt werden solche Materialien deren Kationenaustauschkapazität kleiner als 0,9 meq/g, insbesondere kleiner als 0,8 meq/g ist. Die Kationenaustauschkapazität beträgt gemäß einem besonderen Aspekt der vorliegenden Erfindung mindestens 0,1 meq/g, insbesondere 0,2 meq/g, ohne dass hierdurch eine Beschränkung erfolgen soll. Bevorzugt werden solche Materialien deren Flächenquellung in Wasser bei 80°C von kleiner als 20%, insbesondere kleiner als 10% ist. Bevorzugt werden solche Materialien deren Leitfähigkeit bei 80°C im befeuchteten Zustand kleiner als 0,06 S/cm, insbesondere kleiner als 0,05 S/cm ist.

Zur Messung der IEC werden die Sulfonsäuregruppen in die freie Säure überführt. Hierzu wird das Polymere auf bekannte Weise mit Säure behandelt, wobei überschüssige Säure durch Waschen entfernt wird. So wird das sulfonierte Polymer zunächst 2 Stunden in siedendem Wasser behandelt. Anschliessend wird überschüssiges Wasser abgetupt und die Probe während 15 Stunden bei 160°C im Vakkumtrockenschrank bei p<1 mbar getrocknet. Dann wird das Trockengewicht der Membran bestimmt. Das so getrocknete Polymer wird dann in DMSO bei 80°C während 1 h gelöst. Die Lösung wird anschliessend mit 0,1 M NaOH titriert. Aus dem Verbrauch der Säure bis zum Äquivalentpunkt und dem Trockengewicht wird dann die Ionenaustauschkapazität (IEC) berechnet.

Bei hoher Stromdichte und Temperaturen oberhalb 100°C erfolgt die Befeuchtung dieser dünnen Schicht durch das an der Kathode produzierte Produktwasser. Bei Verwendung von wasserstoffreichem Reformatgas ist die im Reformat vorhandene Feuchtigkeit zur Befeuchtung der Sperrschicht ausreichend. Somit benötigt das System bei Temperaturen oberhalb 100°C und hoher elektrischer Leistung keine zusätzliche Befeuchtung. Unter Umständen kann es jedoch notwendig sein die Brennstoffe beim Start oder bei niedrigen Temperaturen oder bei niedrigen Stromdichten zusätzlich zu befeuchten. Vorzugsweise ist die auf der Kathodenseite aufgebrachte Sperrschicht dicker als die auf der Anodenseite befindliche Sperrschicht.

Die Sperrschicht umfasst vorzugsweise ein Kationenaustauscher-Material. Hierbei können prinzipiell alle Kationenaustauscher-Materialien eingesetzt werden, die zu Membranen verarbeitet werden können. Dabei handelt es sich vorzugsweise um organische Polymere mit kovalent gebundenen Säuregruppen. Zu den besonders geeigneten Säuregruppen gehören unter anderem Carbonsäure-, Sulfonsäure- und Phosphonsäure-Gruppen, wobei insbesondere Sulfonsäuregruppenhaltige Polymere bevorzugt sind. Verfahren zur Sulfonierung von Polymeren sind in F. Kucera et. al. Polymer Engineering and Science 1988, Vol. 38, No 5, 783-792 beschrieben.

Die vorzugsweise als Sperrschichten eingesetzten Kationenaustauscher-Materialien können im allgemeinen nicht allein als Kationenaustauschermembranen in Brennstoffzellen eingesetzt werden, da ihre Protonenleitfähigkeit und Quellung zu niedrig ist und die mechanische Stabilität aufgrund der geringen Dicke nicht gewährleistet werden kann. Die im Stand der Technik beschriebenen Kationenaustauschermembranen wurden jedoch gezielt mit hoher Ionenaustauschkapazität, hoher Quellung, hohe Protonenleitfähigkeit und ausreichender Dicke entwickelt um einen alleinigen Einsatz als Polymerelektrolytmembrane in einer MEE zu gewährleisten.

Im Folgenden sind die wichtigsten Typen von Kationenaustauschmembranen aufgeführt die zum Einsatz in Brennstoffzellen kommerzielle Bedeutung erlangt haben.

Der wichtigste Vertreter ist das Perfluorosulfonsäurepolymer Nafion^{®} (US-A-3692569). Dieses Polymer kann wie in US-A-4453991 beschrieben in Lösung gebracht und dann als Ionomer eingesetzt werden. Kationenaustauschermembranen werden auch erhalten durch Füllen eines porösen Trägermaterials mit einem solchen Ionomer. Als Trägermaterial wird dabei expandiertes Teflon bevorzugt (US-A-5635041).

Eine weitere perfluorinierte Kationenaustauschermembran kann wie in US-A-5422411 beschrieben durch Copolymerisation aus Trifluorostyrol und sulfonylmodifiziertem Trifuorostyrol hergestellt werden. Kompositmembranen bestehend aus einem porösen Trägermaterial, insbesondere expandiertes Teflon, gefüllt mit Ionomeren bestehend aus solchen sulfonylmodfizierten Trifluorostyrol-Copolymeren sind in US-A-5834523 beschrieben.

US-A-6110616 beschreibt Copolymere aus Butadien und Styrol und deren anschliesende Sulfonierung zur Herstellung von Kationenaustauschermembranen für Brennstoffzellen.

Eine weitere Klasse von teilfluorierten Kationenaustauschermembranen kann durch Strahlenpfropfen und nachfolgende Sulfonierung hergestellt werden. Dabei wird wie in EP-A-667983 oder DE-A-19844645 beschrieben an einem zuvor bestrahlten Polymerfilm eine Pfropfungsreaktion vorzugsweise mit Styrol durchgeführt. In einer nachfolgenden Sulfonierungsreaktion erfolgt dann die Sulfonierung der Seitenketten. Gleichzeitig mit der Pfropfung kann auch eine Vernetzung durchgeführt und somit die mechanischen Eigenschaften verändert werden.

Neben obigen Membranen wurde eine weitere Klasse nichtfluorierter Membranen durch Sulfonierung von hochtemperaturstabilen Thermoplasten entwickelt. So sind Membranen aus sulfonierten Polyetherketonen (DE-A-4219077, WO96/01177), sulfoniertem Polysulfon (J. Membr. Sci. 83 (1993) p.211) oder sulfoniertem Polyphenylensulfid (DE-A-19527435) bekannt.

Ionomere hergestellt aus sulfonierten Polyetherketonen sind in WO 00/15691 beschrieben.

Desweiteren sind Säure-Base-Blendmembranen bekannt, die wie in DE-A-19817374 oder WO 01/18894 beschrieben durch Mischungen von sulfonierten Polymeren und basischen Polymeren hergestellt werden.

Zur Einstellung der Ionenaustauschkapazität für einen optimalen Säurerückhalt kann eine aus dem Stand der Technik bekannte Kationenaustauschermembran mit einem Polymer, das keine oder nur eine geringe Menge an Säuregruppen umfasst, gemischt werden. Geeignete Polymere wurden als Blendkomponente zuvor dargelegt, wobei hochtemperaturstabile Polymere besonders bevorzugt sind. Die Herstellung und Eigenschaften von Kationenaustauschermembranen bestehend aus sulfoniertem PEK und a) Polysulfonen (DEA-4422158), b) aromatischen Polyamiden (DE-A-42445264) oder c) Polybenzimidazol (DE-A-19851498) sind beschrieben. Alternativ können die Sulfonierungsbedingungen so gewählt werden, dass ein niedriger Sulfonierungsgrad entsteht (DE-A-19959289).

Neben den im Stand der Technik erwähnten Kationenaustauschermembranen basierend auf organischen Polymeren kann das Kationenaustauschermaterial auch aus organisch-anorganischen Kompositmaterialien bestehend. Solche Kompositmaterialien können bevorzugt mittels des Sol-Gel-Verfahrens hergestellt werden. Als Ausgangsverbindungen werden dabei Gemischen von Metallalkoxiden insbesondere Siloxane verbindet. Diese Gemische zeichnen sich durch eine hohe Reinheit der Ausgangsmaterialien und eine geringe Viskosität. Diese flüssigen Precursor-Gemische können mittels bekannter Technologien wie beispielsweise Sprühen oder Spin Coating zu sehr dünnen und gleichmäßig deckenden Schichten auf ein Substrat aufgebracht werden. Durch Hydrolyse und Kondensation der Precursor-Gemischen können dann feste Filme auf der Oberfläche erzeugt werden. Zur Einstellung der Protonenleitfähigkeit enthalten die organischen Reste der Alkoxide säurehaltige Gruppen, insbesondere Sulfonsäuregruppe.

Die Precursorgemische können ebenfalls funktionelle organische Gruppen enthalten die eine Vernetzung der gebildeten Schicht und somit eine weitere Verringerung der Permeabilität der Mineralsäure und der Brennstoffe bewirken. Die Vernetzung kann nach der Schichtbildung sowohl thermisch als auch durch Bestrahlung (e-, UV, IR, NIR) oder mittels eines Starters erfolgen.

Die Herstellung eines solchen Kompositmaterials ist beispielsweise in Electrochimica Acta Band 37, Jahr 1992, Seiten 1615-1618 beschrieben. Darüber hinaus sind derartige Kompositmaterialien aus G.W. Scherer, C.J. Brinker, Sol-Gel-Science, Academic Press, Bosten, 1990, bekannt.

Eine Gruppe bevorzugter Verbindungen ist durch die Formel (A) darstellbar

(RO)_{y}(R¹)_{z}M-Xₐ (A)

worin
y gleich 1, 2 oder 3, vorzugsweise 3,
z gleich 0 oder 1, vorzugsweise 0 und
a gleich 1 oder 2, vorzugsweise 1 ist und
R und R¹ unabhängig Wasserstoff, ein linearer oder verzweigter Alkyl-, Alkenyl-, Cycloalkyl- oder Cycloalkenylrest mit 1 bis 20, vorzugsweise 1 bis 8 Kohlenstoffatomen, oder eine aromatische oder heteroaromatische Gruppe mit 5 bis 20 Kohlenstoffatomen,
M ein Element ausgewählt aus Si, Zr, Ti, vorzugsweise Si und
X unabhängig eine lineare oder verzweigte Alkylen- oder Cycloalkylengruppe mit 1 bis 20, vorzugsweise 1 bis 8 Kohlenstoffatomen, oder eine aromatische oder heteroaromatische Gruppe mit 5 bis 20 Kohlenstoffatomen, die mindestens eine Sulfonsäure- oder Phosphonsäure aufweist, darstellen.

Die Reste R, R¹ und X können weitere Substituenten, insbesondere Halogene, wie Fluoratome aufweisen. Vorzugsweise stellt die Gruppe X ein Rest der Formeln Ph-SO₃H, CₙH₂ₙ-SO₃H, CₙF₂ₙ-SO₃H dar, worin Ph Phenyl und n eine ganze Zahl von 1 bis 20 darstellt. Vorzugsweise stellt die Gruppe R ein Rest der Formel CₙH₂ₙ₊₁ mit n gleich 1 bis 3 dar.

Bevorzugte Verbindungen sind insbesondere Hydroxysilylsäuren, die an sich bekannt und beispielsweise in DE 100 61 920, EP 0 771 589, EP 0 765 897 und EP 0 582 879 beschrieben sind.

Bevorzugte Hydroxysilylsäuren lassen sich durch die Formeln B oder C darstellen

[(RO)_{y}(R²)_{z}Si-{R¹-SO₃}ₐ]ₓM^{x+} (B)

[(RO)_{y}(R²)_{z}Si-{R¹-O_{b}-P(O_{c}R₃O₂⁻}ₐ]ₓM^{x+} (C)

in der M ein H⁺ ein NH₄⁺ oder ein Metallkation mit einer Wertigkeit von x gleich 1 bis 4 angibt, in der y = 1 bis 3, z = 0 bis 2 und a = 1 bis 3 sind, mit der Maßgabe, dass y +z=4-a ist,
in der b und c = 0 oder 1 sind, in der R und R² gleich oder verschieden sind und Methyl-, Ethyl-, Propyl-, Butylreste oder H bezeichnen und
in der R³ gleich M oder ein Methyl-, Ethyl-, Propyl-, Butylrest ist, und
in der R¹ eine lineare oder verzweigte Alkyl- oder Alkylengruppe mit 1 bis 12 C-Atomen, eine Cycloalkylgruppe mit 5 bis 8 C-Atomen oder eine Einheit der allgemeinen Formeln 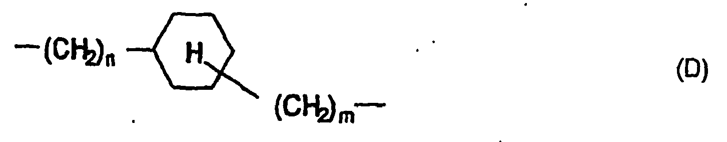 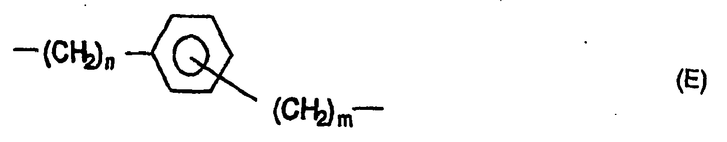 angibt, in der n bzw. m eine Zahl von 0 bis 6 ist.

Bevorzugte Hydroxysilylsäuren bzw deren Vorläufer (Derivate) sind Trihydroxysilylethylsulfonsäure, Trihydroxysilylphenylsulfonsäure, Trihydroxysilylpropylsulfonsäure, Trihydroxysilylpropylmethylphosphonsäure, oder Dihydroxysilylpropylsulfondisäure oder deren Salze.

Die Struktur des Kationenaustauschermaterial kann durch geeignete Wahl der Tri- (Netzwerkbildner), Di- (Kettenbildner) und Monohydroxysilylsäure (Kettenendglied) sowie durch Beifügen weiterer Solbildner exakt eingestellt werden. Geeignete Solbildner sind z. B. die hydrolysierten Vorläufer von SiO₂, Al₂O₃, P₂O₅, TiO₂ oder ZrO₂. Zu den bevorzugt eingesetzten Verbindungen gehören unter anderem Tetramethoxysilan, Tetraethoxysilan, Triethoxyvinylsilan, Trimethoxyvinylsilan, Triethoxypropenylsilan und Trimethoxypropenylsilan.

Als Substrate für die Abscheidung der Sperrschicht können wahlweise ein Film des basischen Polymeren, eine mit Mineralsäure dotierte Polymerelektrolytmembran oder eine mit Edelmetallkatalysator beschichtete Elektrode verwendet werden.

In einer Variante der Erfindung wird die Sperrschicht auf einer Elektrode abgeschieden. ,

Gemäß einem besonderen Aspekt der vorliegenden Erfindung ist das Material, aus dem die Sperrschicht hergestellt wird, chemisch mit dem flächigen mit mindestens einer Mineralsäure dotierten Material verträglich, so dass eine gute Haftung der Sperrschicht auf dem flächigen Material erzielt wird. Beim Einsatz einer Polyazolfolie werden dementsprechend insbesondere organische Kationenaustauscherpolymere eingesetzt, auf denen die dargelegten Polyazole eine hohe Haftung aufweisen. Hierzu gehören insbesondere sulfonierte Polysulfone, Polyetherketone und andere Polymere, die in der Hauptkette aromatische Gruppen aufweisen. Bei Verwendung von anorganischen Materialien kann eine hohe Haftung auf den organischen oder anorganischen Trägem durch Auswahl von geeigneten funktionellen Gruppen erzielt werden.

Bei der Verwendung von anorganischen flächigen Materialien werden dementsprechend vorzugsweise die zuvor dargelegten anorganischen Schichten, die sich beispielsweise durch Hydrolyse von Hydroxysilylsäuren erhalten lassen, eingesetzt.

Die erfindungsgemäßen mehrschichtigen Elektrolytmembranen zeigen unter Berücksichtigung der Sperrschicht eine hervorragende Leitfähigkeit und Leistungsfähigkeit.

Die Protonenleitfähigkeit von bevorzugten mehrschichtigen Elektrolytmembranen beträgt bei Temperaturen von 120°C vorzugsweise mindestens 0,1 S/cm, insbesondere mindestens 0,11 S/cm, besonders bevorzugt mindestens 0,12 S/cm. Diese Leitfähigkeit wird auch bei Temperaturen von 80°C erzielt.

Hierbei kann eine erfindungsgemäße Membran bei geringen Temperaturen befeuchtet werden. Hierzu kann beispielsweise die als Energiequelle eingesetzte Verbindung, beispielsweise Wasserstoff, mit einem Anteil an Wasser versehen werden. In vielen Fällen genügt jedoch auch das durch die Reaktion gebildete Wasser, um eine Befeuchtung zu erzielen.

Die spezifische Leitfähigkeit wird mittels Impedanzspektroskopie in einer 4-Pol-Anordnung im potentiostatischen Modus und unter Verwendung von Platinelektroden (Draht, 0,25 mm Durchmesser) gemessen. DerAbstand zwischen den stromabnehmenden Elektroden beträgt 2 cm. Das erhaltene Spektrum wird mit einem einfachen Modell bestehend aus einer parallelen Anordnung eines ohm'schen Widerstandes und eines Kapazitators ausgewertet. Der Probenquerschnitt der phosphorsäuredotierten Membran wird unmittelbar vor der Probenmontage gemessen. Zur Messung der Temperaturabhängigkeit wird die Messzelle in einem Ofen auf die gewünschte Temperatur gebracht und über eine in unmittelbarer Probennähe positioniertes Pt-100 Thermoelement geregelt. Nach Erreichen der Temperatur wird die Probe vor dem Start der Messung 10 Minuten auf dieser Temperatur gehalten.

Die erfindungsgemäße Polymermembran weist verbesserte Materialeigenschaften gegenüber den bisher bekannten dotierten Polymermembranen auf. Aufgrund der geringen Methanolpermeabilität können die mehrschichtigen Membranen insbesondere in Direkt-Methanol-Brennstoffzellen eingesetzt werden.

Die Durchtritts-Stromdichte beträgt bei Betrieb mit 0,5 M Methanollösung und 90°C in einer so genannten flüssigen Direktmethanolbrennstoffzelle vorzugsweise weniger als 100 mA/cm², insbesondere weniger als 70 mA/cm² besonders bevorzugt weniger als 50 mA/cm² und ganz besonders bevorzugt weniger als 10 mA/cm². Die Durchtritts-Stromdichte beträgt bei Betrieb mit einer 2 M Methanollösung und 160°C in einer so genannten gasförmigen Direktmethanolbrennstoffzelle vorzugsweise weniger als 100 mA/cm², insbesondere weniger als 50 mA/cm² ganz besonders bevorzugt weniger als 10 mA/cm².

Zur Bestimmung der Durchtritts-Stromdichte (cross over current density) wird die Kohlendioxidmenge, die an der Kathode freigesetzt wird, mittels eines CO₂-Sensors gemessen. Aus dem so erhaltenen Wert der CO₂-Menge wird, wie von P. Zelenay, S.C. Thomas, S. Gottesfeld in S. Gottesfeld, T.F. Fuller "Proton Conducting Membrane Fuel Cells II" ECS Proc. Vol. 98-27 S. 300-308 beschrieben, die Durchtritts-Stromdichte berechnet.

Gegenstand der Erfindung ist ferner die bevorzugte Verwendung der erfindungsgemäßen mehrschichtigen Elektrolytmembran oder der beschichteten Elektrode in einer Membran-Elektroden-Einheit (MEE) für eine Brennstoffzelle.

Die MEE enthält mindestens eine erfindungsgemäße mehrschichtige Elektrolytmembran und zwei Elektroden, zwischen denen die mehrschichtige Elektrolytmembran sandwichartig angeordnet ist.

Die Elektroden weisen jeweils eine katalytisch aktive Schicht und eine Gasdiffusionsschicht zur Zuführung eines Reaktionsgases zur katalytisch aktiven Schicht auf. Die Gasdiffusionsschicht ist porös, damit reaktives Gas hindurchtreten kann.

Die erfindungsgemäße mehrschichtige Elektrolytmembran kann als Elektrolytmembran in elektrochemischen Prozessen verwendet werden. Außerdem kann man die Elektrolytmembran sowie einen Vorläufer für eine MEE mit einer oder beiden katalytisch aktiven Schichten herstellen. Des weiteren kann man die MEE auch durch Fixieren der Gasdiffusionsschicht am Vorläufer herstellen.

Ein weiterer Gegenstand der vorliegenden Erfindung ist ein Brennstoffzellensystem mit mehreren unterschiedlichen MEE's von denen mindestens eine erfindungsgemäße mehrschichtige Membran enthalten.

Eine erfindungsgemäße Membran-Elektroden-Einheit zeigt eine überraschend hohe Leistungsdichte. Gemäß einer besonderen Ausführungsform leisten bevorzugte Membran-Elektroden-Einheiten eine Stromdichte von mindestens 0,1 A/cm², bevorzugt 0,2 A/cm², besonders bevorzugt 0,3 A/cm². Diese Stromdichte wird im Betrieb mit reinem Wasserstoff an der Anode und Luft (ca. 20 Vol.-% Sauerstoff, ca. 80 Vol.-% Stickstoff) an der Kathode bei Normaldruck (absolut 1013 mbar, mit offenem Zellausgang) und 0,6V Zellspannung gemessen. Hierbei können besonders hohe Temperaturen im Bereich von 150-200°C, vorzugsweise 160-180°C, insbesondere von 170°C eingesetzt werden.

Die zuvor genannten Leistungsdichten können auch bei geringer Stöchiometrie der Brenngase an beiden Seiten erzielt werden. Gemäß einem besonderen Aspekt der vorliegenden Erfindung ist die Stöchiometrie kleiner oder gleich 2, vorzugsweise kleiner oder gleich 1,5 ganz besonders bevorzugt kleiner oder gleich 1,2.

### Beispiele 1 bis 6

Herstellung von Kationenaustauschermembranen:

### Zur Herstellung von Kationenaustauschermembranen wurden folgende Stammlösungen hergestellt.

a) 10 wt% PES ( Ultrason E 7020 P) in NMP
b) 17 wt% sPEK (Sulfonierungsgrad 50,3%) in NMP

Die Lösungen wurden wie in der Tabelle 1 angegebenen Verhältnisse zusammengemischt und mit dem Rakelrahmen (50 µm) gerakelt. Anschließend wurden die Filme im Ofen bei 120°C 11h getrocknet. Die Dicke der hergestellten Filme sind 20-25 µm.

Die zur Herstellung der Membran eingesetzten Polymere sind in Tabelle 1 dargelegt

**Tabelle 1**

| | PES | sPEK |
|---|---|---|
| | [Gew.-%] | [Gew.-%] |
| Beispiel 1 | 0 | 100 |
| Beispiel 2 | 20 | 80 |
| Beispiel 3 | 30 | 70 |
| Beispiel 4 | 40 | 60 |
| Beispiel 5 | 50 | 50 |
| Beispiel 6 | 60 | 40 |

Die spezifische Leitfähigkeit wird mittels Impedanzspektroskopie in einer 4-Pol-Anordnung im potentiostatischen Modus und unter Verwendung von Platinelektroden (Draht, 0,25 mm Durchmesser) gemessen. Der Abstand zwischen den stromabnehmenden Elektroden beträgt 2 cm. Das erhaltene Spektrum wird mit einem einfachen Modell bestehend aus einer parallelen Anordnung eines Ohm'schen Widerstandes und eines Kapazitators ausgewertet. Der Probenquerschnitt der sulfonierten PEK-Membranen und sulfonierten PEK Blendmembranen wird nach Quellung in Wasser bei 80°C während 1h vor der Probenmontage gemessen. Zur Messung der Temperaturabhängigkeit und zur Befeuchtung wird die Messzelle mit temperiertem Wasser gespült. Vor Versuchsbeginn wird die Zelle 30 Minuten bei 80°C gehalten und dann die Leitfähigkeitsmessung gestartet. Die Abkühlung erfolgt mit 1 K/min. Vor Start jeder neuen Messung wird dann 10 Minuten bei der gewünschten Temperatur gehalten.

In Tabelle 2 ist das Ergebniss der Leitfähigkeitsmessungen von sulfonierten PEK-Membranen und sulfonierten PEK-Blendmembranen aufgezeigt.

**Tabelle 2: Leitfähigkeitswerte von sulfonierten PEK-Membranen und sulfonierten PEK-Blendmembranen (Anteil an PES-Blendkomponente in Gewichtsprozent) zur Verwendung als Sperrschicht für Phosphorsäure**

| T (°C) | Bsp. 1 | Bsp. 2 | Bsp. 3 | Bsp.4 | Bsp. 5 | Bsp. 6 |
|---|---|---|---|---|---|---|
| 80 | 0,196 | 0,160 | 0,150 | 0,149 | 0,046 | 0,035 |
| 70 | 0,181 | 0,148 | 0,139 | 0,137 | 0,042 | 0,031 |
| 60 | 0,164 | 0,136 | 0,125 | 0,125 | 0,037 | 0,028 |
| 50 | 0,150 | 0,124 | 0,113 | 0,112 | 0,032 | 0,025 |
| 40 | 0,133 | 0,110 | 0,099 | 0,098 | 0,027 | 0,022 |
| 30 | 0,116 | 0,096 | 0,086 | 0,085 | 0,023 | 0,018 |
| 22 | 0,105 | 0,086 | 0,077 | 0,074 | 0,020 | 0,016 |

Die Leitfähigkeit und Sperrwirkung der Kationenaustauschermembran für Phosphorsäure hängen stark vom Gehalt an Säuregruppen ausgedrückt durch die sog.lonenaustauschkapazität (IEC) ab.

Zur Messung der IEC wird das sulfonierte Polymer bzw. die sulfonierte Blendmembran zunächst 2 Stunden in siedendem Wasser behandelt. Anschliessend wird überschüssiges Wasser abgetupt und die Probe während 15 Stunden bei 160°C im Vakkumtrockenschrank bei p<1 mbar getrocknet Dann wird das Trockengewicht der Membran bestimmt. Das so getrocknete Polymer wird dann in DMSO bei 80°C während 1 h gelöst. Die Lösung wird anschliessend mit 0,1 M NaOH titriert. Aus dem Verbrauch der Säure bis zum Equivalentpunkt und dem Trockengewicht wird dann die lonenaustauschkapazität (IEC) berechnet.

Zur Bestimmung des Quellverhaltens werden die sulfonierten Membranen bzw. Blendmembranen während 2 Stunden bei 80°C gequollen und die Flächenzunahme bestimmt.

In Tabelle 3 sind die lonenaustauschkapazität von sulfonierter PEK-Membran (0%PES) und Blendmembranen aus sulfoniertem PEK und verschiedenen Gehalten an PES dargestellt.

**Tabelle 3: fonenaustauschkapazität und Quellung bei 80°C von sulfonierter PEK-Membran (0%PES) und Blendmembranen aus sulfoniertem PEK und verschiedenen Gehalten an PES**

| | | T=80°C |
|---|---|---|
| | IEC (meg/g) | Quellung (%) |
| Beispiel 1 | 2,06 | 156 |
| Beispiel 2 | 1,71 | 124,6 |
| Beispiel 3 | 1,34 | 61,6 |
| Beispiel 4 | 1,03 | 41,7 |
| Beispiel 5 | 0,8 | 8,6 |
| Beispiel 6 | 0,59 | 2 |

Zur Messung der Sperrwirkung der Kationenaustauschermembranen am Beispiel von phosphorsäuredotierten Membranen wird wie folgt verfahren:
Zunächst wird eine Kationenaustauschermembran mit einem Durchmesser von 7 cm im trockenen Zustand ausgestanzt. Diese Membran wird anschliessend in 300ml Wasser eingetaucht und die pH-Änderung als Funktion der Zeit gemessen. Bei diesen Membranen kann es aufgrund des gewählten Materials zu einem Abfall des pH-Wertes aufgrund von Resten von freier Säure aus der Sulfonierungsreaktion kommen. Da jede Membran unterschiedlichen Gehalt an Säuregruppen enthält, muss dieser Blindwert für jede einzelne Membran gemessen werden.

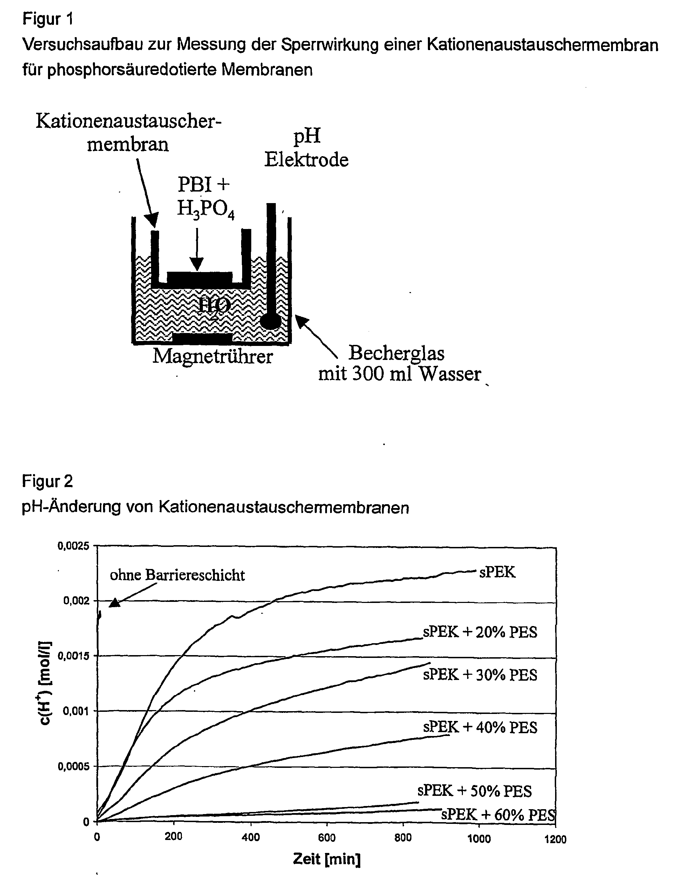

Anschliessend wird eine solche Membran wieder in die Messvorrichtung eingespannt und darauf eine mit säuredotierte Membran gelegt. Zur Dotierung wird ein PBI Film mit einer Ausgangsdicke von 50 µm bei Raumtemperatur in 85% Phosphorsäure über mindestens 72 Stunden eingelegt. Von dieser säuredotierten Membran wird ein Stück mit einem Durchmesser von 3 cm ausgestanzt und unmittelbar auf die Kationenaustauschermembran aufgelegt. Der so hergestellte Sandwich wird dann in ein mit 300 ml Wasser gefülltes Becherglas gelegt und die pH-Änderung während 15 Stunden bei Raumtemperatur (20°C) gemessen. Ein schematischer Aufbau der Messvorrichtung ist in Figur 1 wiedergegeben. Das so erhaltene Ergebnis ist in Figur 2 graphisch dargestellt.

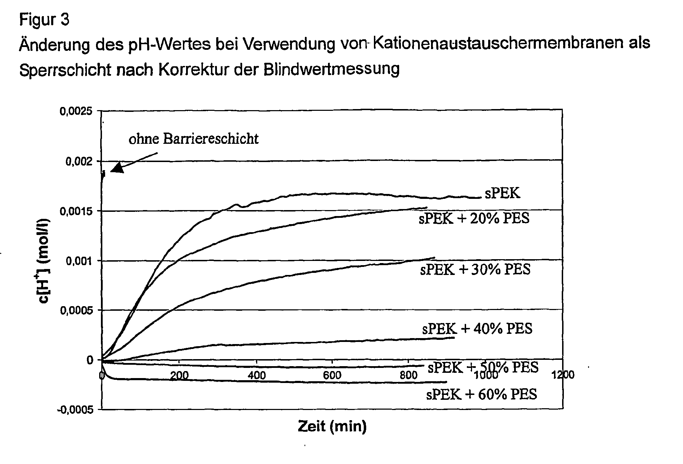

Die negativen Werte in Figur 3 nach Korrektur des Blindwertes können dadurch erklärt werden, dass der Verlust an Säure ausgehend von der Kationenaustauschermembran (Blindwert) selbst grösser als der Durchtritt der Phosphorsäure durch die Kationenaustauschermembran ist.

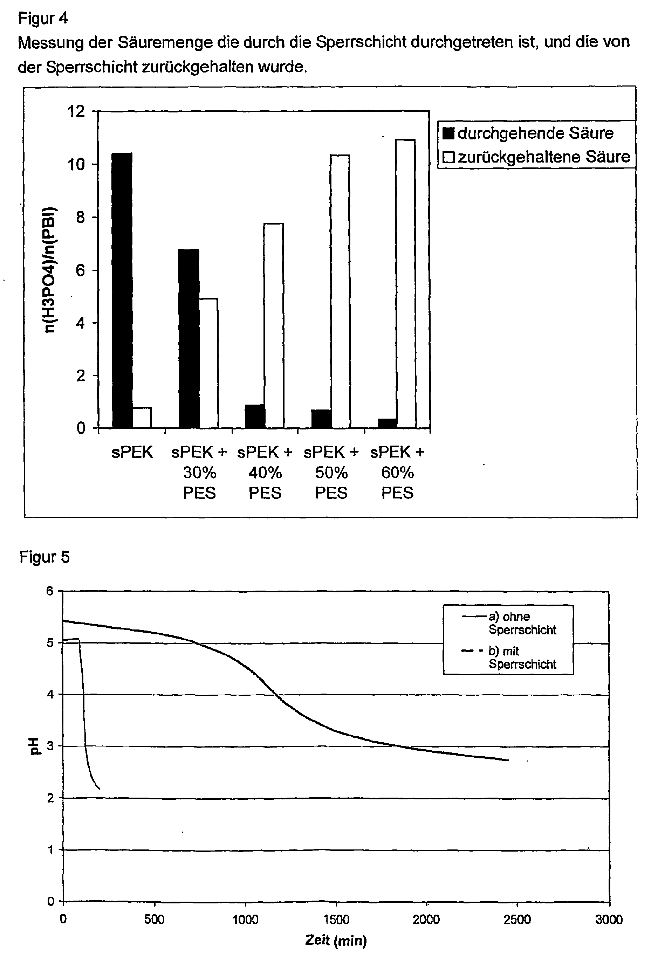

In Figur 4 ist die Messung der Säuremenge die durch die Sperrschicht durchgetreten ist, und die von der Sperrschicht zurückgehalten wurde, zweifelsfrei belegt.

Die Ergebnisse belegen, dass die Verwendung von Kationentauscherrtiaterialien als Sperrschicht zu einer überraschend deutlichen Verringerung der Freisetzung von Mineralsäure führt.

Aus den erhaltenen Ergebnissen zeigt sich überraschend, dass bevorzugte erfindungsgemässen Kationenaustairschermembranen im befeuchteten Zustand bei 80°C eine Leitfähigkeit <0,06 S/cm insbesondere <0,05 S/cm aufweisen.

Bevorzugte erfindungsgemässen Kationenaustauschermembranen weisen einen Wert der IEC von kleiner 0,9 meq/g auf. Die Quellung bevorzugter Kationenaustauschermembranen ist kleiner als 20% bei 80°C. Überraschen konnte festgestellt werden, dass die Verwendung der erfindungsgemässen d.h. mit einer Sperrschicht versehenen Membran mit einer lonenaustauschkapazität von kleiner als 0,9 meq/g und einer Quellung in Wasser von kleiner als 10% bei 80°C zu einer besonders deutlichen Verringerung des Phosphorsäuredurchtritt führt und die Säurekonzentration innerhalb von 15 Stunden nicht über 0,0005 mol/l steigt.

### Beispie 7

Herstellung einer ultradünnen Kationenaustauschermembran als Sperrschicht auf die Membran Oberfläche:
Herstellung PBI-Film:
   Aus einer 15 wt%-ige Polybenzimidazol (PBI)-Lösung in DMAc wurde eine 50 µm Dicke Film gerakelt und im Ofen bei 120°C 12h getrocknet.
Herstellung der Sprühlösung:
   Es wurde eine 10 wt%-ige Lösung aus PES (Ultrason E 7020) und sPEK (Sulfonierungsgrad 50,3%) in DMAc hergestellt, wobei das Gewichtsverhältnis von PES zu sPEK 60:40 betrug.
Beschichtung:
   Für die Beschichtung wurde eine Glasplatte auf eine Heizplatte gelegt und auf 150°C aufgeheizt. Nach Erreichen der Temperatur wurde der PBI-Film auf die Glasplatte aufgelegt. Sobald der Film sich plan auf die Glasplatte zieht, wurde eine Metallschablone aufgelegt. Die Sprühlösung wurde mittels einer Airbrush auf die Filmoberfläche mehrfach besprüht. Das Lösemittel wurde zwischen jeden Sprühvorgang verdampft. Danach wurde die Metallschablone abgenommen, der besprühte Bereich ausgeschnitten. Die Dicke der Beschichtung betrug 4-5 µm.

Die beschichtete Polyazolfolie wird mit der beschichteten Seite nach oben wie in Figur 1 gezeigt eingespannt und dann in ein mit 100 ml Wasser gefülltes Becherglas getaucht. In dieser Konfiguration ist die Unterseite mit Wasser in Kontakt, während auf der gegenüberliegenden Seite 0,5 ml Phosphorsäure aufgebracht wird.

Die Änderung des pH-Wertes wurde über einen Zeitraum von 50 Stunden beobachtet. Zum Vergleich wurde eine Polyazolfolie ohne Sperrschicht dem gleichen Versuch unterzogen.

Die erhaltenen Ergebnisse sind in Figur 5 dargestellt, wobei die Wirksamkeit der dünnen Sperrschicht ersichtlich ist.

## Patentansprüche

1. Mehrschichtige Elektrolytmembran enthaltend mindestens
A. ein mit einer oder mehreren Mineralsäuren dotiertes flächiges Material,
B. mindestens eine Sperrschicht welche mindestens eine der beiden Flächen des unter A. genannten mit Materials bedeckt und eine Sperrwirkung gegenüber Mineralsäuren aufweist.

2. Elektrolytmembran gemäß Anspruch 1, **dadurch gekennzeichnet, daß** als flächiges Materialien gemäß A. ein basisches Polymer, eine Mischungen von einem oder mehreren basischen Polymeren mit anderen Polymeren oder ein chemisch inerter Träger eingesetzt wird.

3. Elektrolytmembran gemäß Anspruch 1 oder 2, **dadurch gekennzeichnet, daß** als basisches Polymer im Sinne der vorliegenden Erfindung wird ein basisches Polymer mit mindestens einem Stickstoffatom in einer Wiederholungseinheit verwendet wird.

4. Elektrolytmembran gemäß Anspruch 1 oder 2, **dadurch gekennzeichnet, daß** das basische Polymer mindestens einen aromatischen Ring mit mindestens einem Stickstoffatom enthält.

5. Elektrolytmembran gemäß Anspruch 4, **dadurch gekennzeichnet, daß** das basische Polymer ein Polyimidazol, ein Polybenzimidazol, ein Polybenzthiazol, ein Polybenzoxazol, ein Polytriazol, ein Polyoxadiazol, ein Polythiadiazol, ein Polypyrazol, ein Polyquinoxaline, ein Poly(pyridine), ein Poly(pyrimidine) oder ein Poly(tetrazapyrene) ist.

6. Elektrolytmembran gemäß Anspruch 2, **dadurch gekennzeichnet, daß** eine Mischung von einem oder mehreren basischen Polymeren mit einem weiteren Polymeren eingesetzt wird.

7. Elektrolytmembran gemäß Anspruch 1, **dadurch gekennzeichnet, daß** es sich bei der Mineralsäure gemäß A. um Phosphorsäure und/oder Schwefelsäure handelt.

8. Elektrolytmembran gemäß Anspruch 1, **dadurch gekennzeichnet, daß** die Sperrschicht gemäß B. ein Kationenaustauscher-Material ist.

9. Elektrolytmembran gemäß Anspruch 8, **dadurch gekennzeichnet, daß** das Kationenaustauscher-Material eine Kationenaustauschkapazität kleiner als 0,9 meq/g aufweist.

10. Elektrolytmembran gemäß Anspruch 8 oder 9, **dadurch gekennzeichnet, daß** das Kationenaustauscher-Material eine Flächenquellung in Wasser bei 80°C von kleiner als 20% aufweist.

11. Elektrolytmembran gemäß einem der Ansprüche 8, 9 oder 10, **dadurch gekennzeichnet, daß** das Kationenaustauscher-Material eine Leitfähigkeit von kleiner 0,06 S/cm (gemessen bei 80°C in befeuchtetem Zustand) aufweist.

12. Elektrolytmembran gemäß Anspruch 1, **dadurch gekennzeichnet, daß** die Sperrschicht eine Dicke von 10 bis 30 µm aufweist.

13. Elektrolytmembran gemäß Anspruch 1, **dadurch gekennzeichnet, daß** die Sperrschicht eine Dicke von kleiner als 10µm aufweist.

14. Elektrolytmembran gemäß Anspruch 1, **dadurch gekennzeichnet, daß** die auf der Kathodenseite aufgebrachte Sperrschicht dicker als die auf der Anodenseite befindliche Sperrschicht.

15. Elektrolytmembran gemäß Anspruch 1, **dadurch gekennzeichnet, daß** die Sperrschicht gemäß B. ein Kationenaustauscher-Material auf Basis eines organischen Polymeren oder eines organisch-anorganischen Kompositmaterials mit kovalent gebundenen Säuregruppen ausgewählt aus der Gruppe Carbonsäuren, Sulfonsäuren und/oder Phosphonsäure ist.

16. Verwendung der mehrschichtigen Elektrolytmembran gemäß Anspruch 1 in einer Membran-Elektroden-Einheit (MEE).

17. Membran-Elektroden-Einheit enthaltend mindestens eine erfindungsgemäße mehrschichtige Elektrolytmembran und zwei Elektroden, zwischen denen die mehrschichtige Elektrolytmembran sandwichartig angeordnet ist.

18. Membran-Elektroden-Einheit gemäß Anspruch 17, **dadurch gekennzeichnet, daß** die auf der Kathodenseite aufgebrachte Sperrschicht dicker als die auf der Anodenseite befindliche Sperrschicht ist.

19. Elektrode die mit einem Kationenaustauschermaterial definiert in den Ansprüchen 8 bis 11 beschichtet wobei die Schichtdicke des Kationenaustauschermaterials 10 bis 30µm beträgt.

20. Elektrode die mit einem Kationenaustauschermaterial definiert in den Ansprüchen 8 bis 11 beschichtet wobei die Schichtdicke des Kationenaustauschermaterials kleiner als 10µm ist.

21. Membran-Elektroden-Einheit enthaltend eine mit Mineralsäuren dotierte Elektrolytmembran und mindestens eine Elektrode gemäß Anspruch 19 oder 20.

22. Brennstoffzellensystem mit enthaltend mehrere unterschiedliche oder gleichartige Membran-Elektroden-Einheiten von denen mindestens eine eine mehrschichtige Elektrolytmembran gemäß Anspruch 1 enthält.

## Claims

1. A multilayer electrolyte membrane comprising at least
A. a flat material doped with one or more mineral acids, and
B. at least one barrier layer which covers at least one of the two surfaces of the material specified under A and which has a barrier effect towards mineral acids.

2. The electrolyte membrane according to Claim 1, **characterized in that** a basic polymer, a mixture of one or more basic polymers with other polymers or a chemically inert support is used as flat material according to A.

3. The electrolyte membrane according to Claim 1 or 2, **characterized in that** a basic polymer having at least one nitrogen atom in a repeating unit is used as basic polymer in the sense of the present invention.

4. The electrolyte membrane according to Claim 1 or 2, **characterized in that** the basic polymer contains at least one aromatic ring having at least one nitrogen atom.

5. The electrolyte membrane according to Claim 4, **characterized in that** the basic polymer is a polyimidazole, a polybenzimidazole, a polybenzothiazole, a polybenzoxazole, a polytriazole, a polyoxadiazole, a polythiadiazole, a polypyrazole, a polyquinoxaline, a poly(pyridine), a poly(pyrimidine) or a poly(tetrazapyrene).

6. The electrolyte membrane according to Claim 2, **characterized in that** a mixture of one or more basic polymers with a further polymer is used.

7. The electrolyte membrane according to Claim 1, **characterized in that** the mineral acid according to A. is phosphoric acid and/or sulphuric acid.

8. The electrolyte membrane according to Claim 1, **characterized in that** the barrier layer according to B. is a cation-exchange material.

9. The electrolyte membrane according to Claim 8, **characterized in that** the cation-exchange material has a cation-exchange capacity of less than 0.9 meq/g.

10. The electrolyte membrane according to Claim 8 or 9, **characterized in that** the cation-exchange material has an area swelling in water at 80 °C of less than 20%.

11. The electrolyte membrane according to any one of Claims 8, 9 and 10, **characterized in that** the cation-exchange material has a conductivity of less than 0.06 S/cm (measured at 80 °C in moistened state).

12. The electrolyte membrane according to Claim 1, **characterized in that** the barrier layer has a thickness of 10 to 30 µm.

13. The electrolyte membrane according to Claim 1, **characterized in that** the barrier layer has a thickness of less than 10 µm.

14. The electrolyte membrane according to Claim 1, **characterized in that** the barrier layer applied to the cathode side is thicker than the barrier layer located on the anode side.

15. The electrolyte membrane according to Claim 1, **characterized in that** the barrier layer according to B. is a cation-exchange material based on an organic polymer or an organic-inorganic composite material having covalently bound acid groups selected from the group consisting of carboxylic acids, sulphonic acids and phosphonic acids.

16. The use of the multilayer electrolyte membrane according to Claim 1 in a membrane-electrode assembly (MEA).

17. A membrane-electrode assembly containing at least one multilayer electrolyte membrane according to the invention and two electrodes between which the multilayer electrolyte membrane is located in a sandwich-like arrangement.

18. The membrane-electrode assembly according to Claim 17, **characterized in that** the barrier layer applied to the cathode size is thicker than the barrier layer located on the anode side.

19. An electrode coated with a cation-exchange material as defined in Claims 8 to 11, wherein the layer thickness of the cation-exchange material is from 10 to 30 µm.

20. An electrode coated with a cation-exchange material as defined in Claims 8 to 11, wherein the layer thickness of the cation-exchange material is less than 10 µm.

21. A membrane-electrode assembly containing an electrolyte membrane doped with mineral acids and at least one electrode according to Claim 19 or 20.

22. A fuel cell system containing a plurality of different or similar membrane-electrode assemblies of which at least one contains a multilayer electrolyte membrane according to Claim 1.

## Revendications

1. Membrane électrolyte multicouche comprenant au moins
A. un matériau plat doté d'un ou plusieurs acides minéraux,
B. au moins une couche de barrage qui recouvre au moins l'une des deux surfaces du matériau cité sous A. et présente un effet barrière face aux acides minéraux.

2. Membrane électrolyte selon revendication 1 **caractérisée en ce que,** comme matériau plat selon A., un polymère basique, un mélange d'un ou plusieurs polymères basiques avec d'autres polymères ou un support inerte chimiquement est utilisé.

3. Membrane électrolyte selon revendication 1 ou 2 **caractérisée en ce que,** comme polymère basique, d'après la présente invention un polymère basique est utilisé avec au moins un atome d'azote dans une unité de répétition.

4. Membrane électrolyte selon revendication 1 ou 2 **caractérisée en ce que** le polymère basique contient au moins un anneau aromatique avec au moins un atome d'azote.

5. Membrane électrolyte selon revendication 4 **caractérisée en ce que** le polymère basique est un polyimidazole, un polybenzimidazole, un polybenzthiazole, un polybenzoxazole, un polytriazole, un polyoxadiazole, un polythiadiazole, un polypyrazole, un polyquinoxaline, un polypyridine, un polypyrimidine ou un polytetrazapyrène.

6. Membrane électrolyte selon revendication 2 **caractérisé en ce qu'**un mélange d'un ou plusieurs polymères basiques est utilisé avec un autre polymère.

7. Membrane électrolyte selon revendication 1, **caractérisé en ce que,** dans le cas de l'acide minéral selon A., il s'agit d'aide phosphorique et/ou d'acide sulfurique.

8. Membrane électrolyte selon revendication 1 **caractérisé en ce que** la couche de barrage selon B. est un matériau échangeur de cations.

9. Membrane électrolyte selon revendication 8 **caractérisée en ce que** le matériau échangeur de cations présente une capacité d'échange de cations inférieure à 0,9 meq/g.

10. Membrane électrolyte selon revendication 8 ou 9 **caractérisée en ce que** le matériau échangeur de cations présente un gonflement de surface dans l'eau à 80°C inférieure à 20%.

11. Membrane électrolyte selon l'une des revendications 8, 9,ou 10 **caractérisée en ce que** le matériau échangeur de cations présente une conductibilité inférieure à 0,06 S/cm (mesurée à 80 °C à l'état humidifié).

12. Membrane électrolyte selon revendication 1 **caractérisée en ce que** la couche de barrage présente une épaisseur de 10 à 30 µm.

13. Membrane électrolyte selon revendication 1 **caractérisée en ce que** la couche de barrage présente une épaisseur inférieure à 10 µm.

14. Membrane électrolyte selon revendication 1 **caractérisée en ce que** la couche de barrage posée sur le côté de la cathode est plus épaisse que la couche de barrage se trouvant sur le côté de l'anode.

15. Membrane électrolyte selon revendication 1 **caractérisée en ce que** la couche de barrage selon B. est un matériau échangeur de cations à base d'un polymère organique ou un matériau composite organique-anorganique avec des groupes d'acides en liaison covalente sélectionnés dans le groupe des acides de carbone, acides sulfoniques et / ou acides phosphoriques.

16. Utilisation de la membrane électrolyte multicouche selon revendication 1 dans une unité membrane-électrode (MEA).

17. Unité membrane-électrode comprenant au moins une membrane électrolyte multicouche conforme à l'invention et deux électrodes entre lesquelles la membrane électrolyte multicouche est prise en sandwich.

18. Unité membrane-électrode selon revendication 17 **caractérisée en ce que** la couche de barrage posée sur le côté de la cathode est plus épaisse que la couche de barrage se trouvant sur le côté de l'anode.

19. Électrode qui est recouverte d'un matériau échangeur de cations défini dans les revendications 8 à 11, sachant que l'épaisseur de couche du matériau échangeur de cations est de 10 à 30 µm.

20. Électrode qui est recouverte d'un matériau échangeur de cations défini dans les revendications 8 à 11, sachant que l'épaisseur de couche du matériau échangeur de cations est inférieure à 10 µm.

21. Unité membrane-électrode comprenant une membrane électrolyte dotée d'acides minéraux et d'au moins une électrode selon revendication 19 ou 20.

22. Système de cellule à combustion comprenant plusieurs unités membrane-électrode différentes ou identiques parmi lesquelles au moins une contient une membrane électrolyte multicouche selon revendication 1.
